(19) Europäisches Patentamt / European Patent Office / Office européen des brevets

(11) **EP 2 242 052 A1**

(12) **EUROPEAN PATENT APPLICATION**
published in accordance with Art. 153(4) EPC

(43) Date of publication:
**20.10.2010 Bulletin 2010/42**

(51) Int Cl.:
***G11B 7/24*** *(2006.01)*

(21) Application number: **09802690.9**

(22) Date of filing: **27.07.2009**

(86) International application number:
**PCT/JP2009/003536**

(87) International publication number:
**WO 2010/013441 (04.02.2010 Gazette 2010/05)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **31.07.2008 JP 2008198675**

(71) Applicant: **Panasonic Corporation
Kadoma-shi
Osaka 571-8501 (JP)**

(72) Inventors:
• **TSUKUDA, Masahiko
Osaka-shi
Osaka 540-6207 (JP)**
• **TOMIYAMA, Morio
Osaka-shi
Osaka 540-6207 (JP)**

(74) Representative: **Eisenführ, Speiser & Partner
Postfach 10 60 78
28060 Bremen (DE)**

(54) **PHOTO-INFORMATION RECORDING MEDIUM AND RECORD-PLAYBACK DEVICE**

(57) A disk-shaped optical information recording medium (115) includes a substrate (101), first to nth information layers (102 - 104) layered upon the substrate (where n is an integer of 3 or more), kth intermediate layers (105, 106) provided between a kth information layer and a (k + 1)th information layer (where k = 1, 2, and so on up to n-1), and a protective layer (107) provided upon the nth information layer. The fluctuation range of the thicknesses from the protective layer surface (107a) to each of the information layers (102 - 104) is no more than ±3 µm relative to the average value of the thicknesses within a range from a radius of 23 mm to 24 mm from the center of the optical information recording medium.

FIG. 1A

EP 2 242 052 A1

115

3

2

4

FIG. 1B

**Description**

TECHNICAL FIELD

The present invention relates to an optical information recording medium having a thin film formed upon a substrate and that is capable of recording information such as audio/video as a digital signal that can be reproduced. The recording of information onto the optical information recording medium can be executed using a high-energy light beam such as a laser beam. The present invention particularly relates to an optical information recording medium capable of recording a large amount of information through the multilayering of information layers.

BACKGROUND ART

Research into optical information recording techniques has been advancing in recent years. The optical information recording media being developed are widely used for industrial and consumer uses. In particular, optical information recording media capable of recording information at high densities, such as CDs and DVDs, have become widespread. Such optical information recording media have a transparent substrate in which is formed pits expressing an information signal and a concavo-convex shape such as guidance grooves for tracking of recording/reproduction light; a thin film composed of metal or another thermally-recordable material, layered upon the transparent substrate; a resin layer that protects the thin film from atmospheric moisture and the like; and a layer that protects the transparent substrate. Information recorded onto the optical information recording medium is reproduced by irradiating the thin film composed of metal or another thermally-recordable material with laser light and detecting changes in the amount of reflected light therefrom and so on.

A typical method of manufacturing such an optical information recording medium is as follows.

When manufacturing, for example, a CD, the substrate is first formed using a mold called a "stamper". The stamper has a concavo-convex shape on one of its surfaces. A resin substrate having a concavo-convex shape on one of its surfaces is formed through a technique such as injection molding using the stamper. "Concavo-convex shape" can also be referred to as a "signal pattern". An information layer is then formed upon the concavo-convex shape through deposition, sputtering, or the like using a metal or another thin film material. After this, a protective layer is formed through coating using an ultraviolet curable resin or the like.

Meanwhile, when manufacturing a DVD, a resin substrate approximately 0.6 mm thick is formed through injection molding or the like using a stamper. An information layer composed of a metal or another thin film material is then formed upon the concavo-convex shape in the resin substrate. After this, a separately-prepared resin substrate approximately 0.6 mm thick is laminated upon the information layer using an ultraviolet curable resin.

Recent years are seeing an increased demand for such optical information recording media to have larger capacities. To meet such demand, attempts at implementing higher densities in such optical information recording media are being made. With respect to the above-described DVDs, dual-layer optical information recording media have been proposed. With a dual-layer optical information recording medium, two information layers, each formed of a thin film composed of metal or another material and having a concavo-convex shape, are provided sandwiching a intermediate layer several tens of µm thick, in order to achieve higher capacities.

Meanwhile, the recent spread of digital high-definition broadcasting has led to a demand for next-generation optical information recording media having even higher densities and capacities than DVDs. High-capacity media such as Blu-ray disks have been proposed to meet such demand. Compared to a DVD, a Blu-ray disk has a narrower pitch between the tracks formed in the concavo-convex shape of the information layer, and the size of the pits is also smaller. For this reason, it is necessary, when recording and reproducing information, to concentrate the spot of the laser light into a smaller area on the information layer. When recording and reproducing information to and from a Blu-ray disk, an optical head equipped with a violet laser whose laser light wavelength is a short 405 nm and an objective lens whose numerical aperture (NA) is 0.85 is used. Concentrating the laser light using the objective lens concentrates the spot of the laser light (the beam spot) onto a small area on the information layer. However, when the spot is small, the position of the beam spot is greatly affected by disk tilt. In other words, aberration will occur in the beam spot with even a slight tilt in the disk, causing distortion in the concentrated beam; this results in a problem in that recording and reproduction cannot be performed. Blu-ray disks solve this problem by setting the thickness of the protective layer on the laser entry side of the disk to approximately 0.1 mm.

Furthermore, with a recording and reproduction system that uses an optical head having an objective lens with such a high NA, the aberration exerts a great influence on the quality of the laser light concentrated upon the information layer. This "aberration" includes spherical aberration, which occurs as a result of the thickness from the outermost surface of the disk to the information layer. Recording and reproduction systems are thus provided with configurations for correcting aberration occurring due to this thickness. For example, configurations have been proposed in which the optical head is provided with a spherical aberration correction unit that uses a combination lens, a spherical aberration correction unit that uses liquid-crystals, and so on.

Incidentally, even higher capacities are being demanded even in high-capacity next-generation optical information recording media such as Blu-ray disks. One method proposed to meet such demand is increasing capacities through the multilayering of information layers, in the same manner as with DVDs. When multilayering the information layers in a Blu-ray disk, the information layers are disposed so that the information layer furthest from the surface of the disk on the laser light-entry side (called simply the "disk surface" or the "medium surface" hereinafter) is approximately 0.1 mm from the disk surface, in the same manner as in a single-layer medium; this is done to reduce the influence of disk tilt. The information layers are thus layered with transparent layers several $\mu$m to several tens of $\mu$m thick, called intermediate layers, between each pair of information layers, all within a space approximately 0.1 mm thick.

A typical method for manufacturing a multilayer Blu-ray disk is described below. As an example, a manufacturing method for a dual-layer optical information recording medium, which has two information layers, includes the following (i) - (v):

(i) forming a thin metal film, a thermally-recordable thin film material, or the like upon a molded resin substrate, approximately 1.1 mm thick, having pits, guidance grooves, and so on in a concavo-convex shape on one surface, thereby forming a first information layer;

(ii) forming a intermediate layer several $\mu$m to several tens of $\mu$m thick upon the information layer on the substrate, in order to separate the information layer from an information layer adjacent thereto;

(iii) transferring the pits and guidance grooves onto the upper side of the intermediate layer by pressing the intermediate layer with a stamper having a concavo-convex shape corresponding to the pits and guidance grooves on one side;

(iv) forming a thin metal film or thermally-recordable thin film material, the film being semitransparent with respect to the wavelength of the laser light irradiated onto the pits and guidance grooves, thereby forming a second information layer; and

(v) forming a protective layer upon the second information layer in order to protect the second information layer.

A recording medium having three or more information layers can be manufactured by repeating the processes from the intermediate layer formation (ii) to the second information layer formation (iv) multiple times, thereby layering multiple information layers.

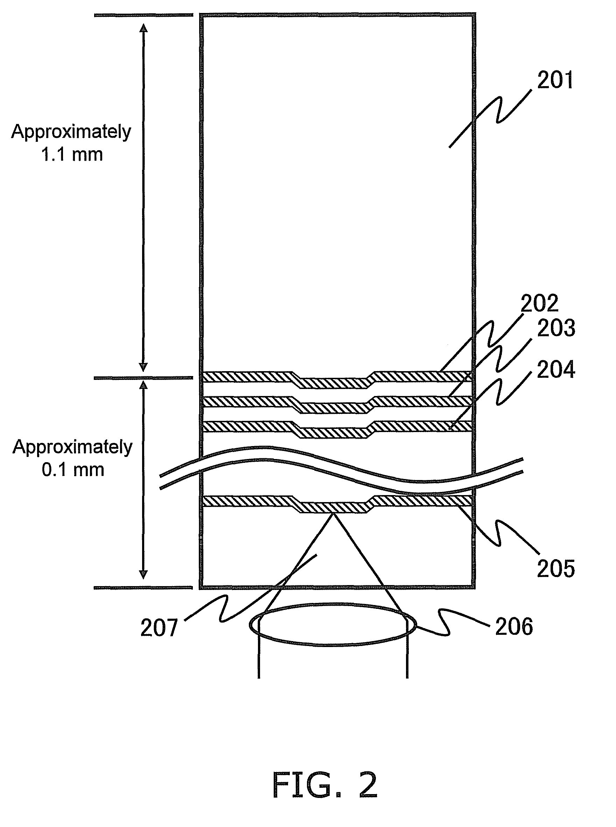

With a multilayer Blu-ray disk, all the information layers are disposed within a space approximately 0.1 mm thick, as described earlier, in order to reduce the influence of disk tilt. Therefore, as shown in FIG. 2, the distance from the surface on the laser light-entry side of the disk to a first information layer 202, which is furthest from that surface, is limited to approximately 0.1 mm. The other information layers are layered toward the surface side of the disk.

Although dual-layer media are well-known as such multilayer media, structures having three or more layers are also being proposed.

With an optical information recording medium that has multiple information layers, when the laser light is focused upon the information layer on which is recorded the signal to be read out, light is also reflected by other information layers or other layers. Such reflected light does not contribute to the recording or reproduction of information. Such light that does not contribute to the recording or reproduction of information is called "stray light". Conversely, light reflected by the information layer that is to be recorded to or reproduced is called "information light". When stray light is reflected in multiple through one of the information layers and returns to the optical head along the same optical path as the information light, the stray light interferes with the information light, causing large fluctuations in the light amount. Problems caused by such interference are particularly apparent in multilayer media having three or more information layers. Such fluctuation in the light amounts caused by interference between the information light to be read out and stray light is called a "back-focus issue". Various investigations are being made with respect to the elimination of such back-focus issues.

For example, Patent Citation 1 discloses a disk having five signal surfaces, where each signal surface is disposed so that the distance between one signal surface and its adjacent signal surface increases or decreases the further away the signal surface is from the disk substrate.

Furthermore, Patent Citation 2 discloses a multilayer medium, having three or more information layers, structured with the goal of eliminating the influence of crosstalk between the information layers (interlayer crosstalk). With the structure disclosed in Patent Citation 2, the thicknesses of each of the intermediate layers differ from one another. Patent Citation 2 particularly discloses a four-layer medium, having four information layers, and furthermore having a first intermediate layer that is furthest from the recording/reproduction light-entry side, and a second intermediate layer and third intermediate layer that are layered in order moving toward the beam entry side. In this medium, the second information layer is the thickest.

Patent Citation 1: JP2001-155380A

Patent Citation 2: JP2004-213720A

SUMMERY OF INVENTION

TECHNICAL PROBLEM

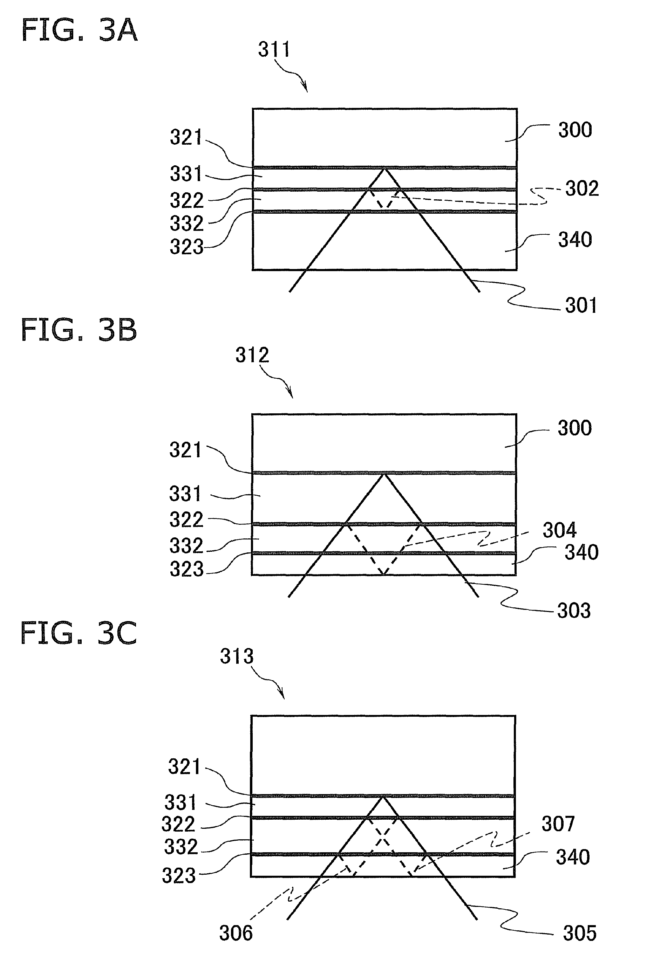

FIG. 3A illustrates a such a pattern in which a back-focus issue occurs.

A disk 311 shown in FIG. 3A is a three-layer disk. The disk 311 is composed of a substrate 300, first to third information layers 321-323, first and second intermediate layers 331 and 332, and a protective layer 340. The first to third information layers 321-323 are layered in that order upon the substrate 300. The first intermediate layer 331 is disposed between the first information layer 321 and the second information layer 322, and the second intermediate layer 332 is disposed between the second information layer 322 and the third information layer 323. The protective layer 340 is disposed upon the third information layer 323. Laser light is irradiated onto the disk 311 from the side on which the protective layer 340 is located.

In the disk 311, the thickness of the first intermediate layer 331 is the same as the thickness of the second intermediate layer 332. Therefore, when laser light is focused onto the first information layer 321, stray light 302, arising due to the laser light being reflected by the second information layer 322, is focused upon the third information layer 323. As a result, the stray light 302 returns along almost the same optical path as information light 301 from the first information layer 321. This causes a back-focus issue to occur.

Varying the thicknesses of the two intermediate layers with respect to one another has been proposed as a way to eliminate such a back-focus issue.

A disk 312 in FIG. 3B and a disk 313 in FIG. 3C are also three-layer disks including first to third information layers 321-323, like the disk 311 in FIG. 3A. In the disk 312, the first intermediate layer 331 is thicker than the second intermediate layer 332, whereas in the disk 313, the second intermediate layer 332 is thicker than the first intermediate layer 331.

However, it has become clear that back-focus issues arise even in such disks in which the intermediate layers have different thicknesses from one another.

With the disk 312 in FIG. 3B, when the laser light is focused upon the first information layer 321, stray light 304 arising due to reflections from the second information layer 322 is focused upon the surface of a protective layer 340. The stray light 304 returns along almost the same optical path as information light 303 from the first information layer 321.

Meanwhile, in FIG. 3C, when laser light is focused upon the first information layer 321, stray light 306 and 307, reflected from the second information layer 322 or the third information layer 323, is not focused upon any of the information layers or the protective layer surface, but does return along almost the same optical path as information light 305.

As with the pattern in FIG. 3A, a large fluctuation in the light amount occurs in the patterns in FIGS. 3B and 3C as well.

Incidentally, in the manufacturing of dual-layer and three-layer media, the spin coat method, using an ultraviolet curable resin, is generally used in the formation of the intermediate layers that separate the information layers, the protective layer, and so on. Thus, it is necessary to allow for a thickness distribution in the intermediate layers and protective layer across the entire surface of the medium to be within the range of at least approximately $\pm 3$ $\mu$m, including lot-to-lot variability.

In addition, there is demand for three-layer Blu-ray disks to be compatible with the single-layer and dual-layer Blu-ray disks currently being sold. Thus, the thickness from the information layer furthest from the surface of the disk to the protective layer surface (the surface of the disk) is limited to approximately 100 $\mu$m

Taking into consideration such limitations on the manufacture of media, it is apparent that the media disclosed in Patent Citations 1 and 2 cannot completely eliminate back-focus issues.

It is an object of the present invention to provide an optical information recording medium and a recording and reproduction apparatus capable of reducing back-focus issues while ensuring compatibility with the single-layer and dual-layer optical information recording media currently being sold and taking into consideration the manufacturing margin for such optical information recording media.

TECHNICAL SOLUTION

An optical information recording medium according to a first aspect of the present invention is a disk-shaped optical information recording medium including a substrate, first to nth information layers layered upon the substrate (where n is an integer of 3 or more), kth intermediate layers provided between a kth information layer and a (k + 1)th information layer (where k = 1,2, and so on up to n-1), and a protective layer provided upon the nth information layer, wherein the fluctuation range of the thicknesses from the protective layer surface to each of the information layers is no more than $\pm 3$ $\mu$m relative to the average value of the thicknesses within a range from a radius of 23 mm to 24 mm from the center of the optical information recording medium.

Furthermore, as a recording and reproduction apparatus that records information to this optical information recording medium and/or reproduces information recorded on the optical information recording medium, an apparatus including a laser light source having a wavelength no less than 400 nm and no more than 410 nm, an objective lens having an NA of 0.85 ±0.01, and a spherical aberration correction unit that corrects spherical aberration in accordance with the thickness from the surface of the protective layer to the information layer, of the first to nth information layers, onto which laser light is irradiated, can be given.

ADVANTAGEOUS EFFECTS

According to the present invention, a sufficient process margin for manufacturing intermediate layers and protective layers is secured for a multilayer optical information recording medium including three or more information layers. Furthermore, according to the present invention, it is possible, in a multilayer optical information recording medium, to ensure compatibility with conventional single- and dual-layer optical information recording media, reduce the influence of interlayer crosstalk, and furthermore eliminate back-focus issues.

BRIEF DESCRIPTION OF DRAWINGS

FIG. 1A is a cross-sectional view showing an example of a three-layer disk structure.
FIG. 1B is a plan view showing an example of a three-layer disk structure.
FIG. 2 is a cross-sectional view showing an example of a multilayer disk structure.
FIG. 3A is a diagram illustrating a pattern in which a back-focus issue occurs.
FIG. 3B is a diagram illustrating another pattern in which a back-focus issue occurs.
FIG. 3C is a diagram illustrating yet another pattern in which a back-focus issue occurs.
FIG. 4 is a diagram illustrating a relationship between the number of disks manufactured and the surface thickness distribution of a second intermediate layer.
FIG. 5 is a diagram illustrating the relationship between the surrounding temperature of a coating apparatus and the average value of the surface thickness of the second intermediate layer.
FIG. 6 is a diagram illustrating the variability in the thickness from the surface of a protective layer to each information layer.
FIG. 7 is a diagram illustrating the structure of a dual-layer disk used to investigate layer thicknesses.
FIG. 8 is a diagram illustrating a relationship between the thickness of a intermediate layer and the properties of a reproduced signal.
FIG. 9 is a diagram illustrating the amplitude of the reproduced signal relative to the difference in inter-layer thicknesses.
FIG. 10 is a diagram illustrating a relationship between thickness changes and aberration.
FIG. 11 is a diagram illustrating the relationship between the thickness of the protective layer and the SER.
FIG. 12A is a diagram illustrating an example of a back-focus issue caused by three reflections.
FIG. 12B is a diagram illustrating another example of a back-focus issue caused by three reflections.
FIG. 12C is a diagram illustrating yet another example of a back-focus issue caused by five reflections.
FIG. 13 is a diagram illustrating the relationship between the ratio of the amount of stray light to the amount of information light and the fluctuation range of the reproduced signal amplitude.
FIG. 14 is a diagram illustrating an example of a pattern in which a back-focus issue occurs.
FIG. 15A is a reproduced signal waveform in a disk having a thick protective layer (a state where no interference occurs).
FIG. 15B is a reproduced signal waveform in a disk having a thin protective layer (a state where interference occurs).
FIG. 16 is a diagram illustrating a result of comparing the optical path length of information light to the optical path length of stray light.
FIG. 17 is a diagram illustrating an exemplary configuration of an optical head.
FIG. 18 is a cross-sectional view showing an example of a multilayer disk structure.
FIG. 19 is a cross-sectional view showing an example of a single-layer disk structure.
FIG. 20 is a cross-sectional view showing an example of a dual-layer disk structure.
FIG. 21 is a cross-sectional view showing an example of a three-layer disk structure.
FIG. 22 is a cross-sectional view showing an example of a four-layer disk structure.
FIG. 23 is a cross-sectional view illustrating the physical structure of a disk.
FIG. 24 is a diagram illustrating an example of tracks on a 25 GB BD.
FIG. 25 is a diagram illustrating an example of tracks on a disk having a higher recording density than a 25 GB BD.

FIG. 26 is a plan view illustrating tracks and laser light irradiated upon a string of marks recorded in the tracks.

FIG. 27 is a diagram illustrating a relationship between the OTF and the spatial frequency of a disk whose recording capacity is 25 GB.

FIG. 28 is a diagram illustrating a relationship between the signal amplitude and spatial frequency when the spatial frequency of the shortest mark (2T) is greater than the OTF cutoff frequency and the amplitude of the reproduced signal of 2T is 0.

DETAILED DESCRIPTION OF THE EMBODIMENTS

Embodiments of the present invention shall now be described with reference to the drawings.

[1. Outline of Structure of Three-Layer Disk]

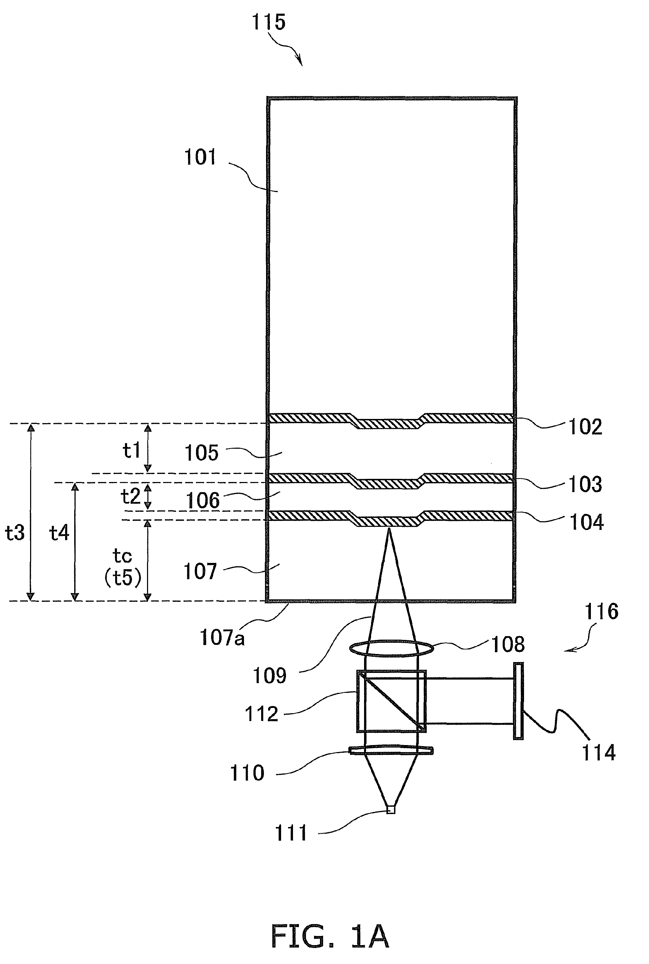

FIG. 1A is a cross-section of a disk 115 (an optical information recording medium; a three-layer disk) according to a first embodiment of the present invention, and also schematically illustrates a part of an apparatus that records information onto the disk 115 and/or reads out information from the disk 115.

Note that in the present specification, the term "optical information recording medium" includes various recording media such as DVDs, CDs, Blu-ray disks, and so on. A "disk" is a disk-shaped recording medium. With the exception of the descriptions of the related art, the "optical information recording medium" referred to in the present specification is also sometimes called simply a "recording medium", a "medium", an "optical disk", a "disk", or the like. In other words, in the following description, these terms are often used interchangeably.

The disk 115 is a disk-shaped optical information recording medium with an outer diameter of approximately 120 mm and a thickness of approximately 1.2 mm. Note that these values can be changed.

As shown in FIG. 1A, the disk 115 has a substrate 101, first through third information layers 102-104, first and second intermediate layers 105 and 106, and a protective layer 107. As shall be mentioned later, the first through third information layers 102-104 are write-once information layers. In other words, the disk 115 is a write-once optical information recording medium including three information layers. The first through third information layers 102-104 may be referred to simply as "information layers" when not being distinguished from one another. Similarly, the first and second intermediate layers 105 and 106 are sometimes referred to simply as "intermediate layers".

The substrate 101 is composed of resin (for example, a polycarbonate resin), and is approximately 1.1 mm thick. Guidance grooves composed of a concavo-convex shape are formed on one surface of the substrate 101.

The first through third information layers 102-104 contain a write-once phase change material. "Write-once phase change material" refers to a material that can take on two or more states having different optical properties due to heat resulting from the irradiation of recording/reproduction light. Preferably, the write-once phase change material is a material in which the stated reaction can result in an irreversible change. It is preferable to use, as the write-once phase change material, a material that contains, for example, O and M (where M is a single element or plural elements selected from Te, Al, Si, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, and Bi). Furthermore, the first through third information layers 102-104 may be structured so as to contain those materials and a dielectric material layered thereupon. Note, however, that the materials contained in the information layers are not limited only to these materials. The write-once phase change material may be a material that can be recorded to only once, or may be replaced with a material that can be recorded to repeatedly.

Note that the present invention can be applied to a read-only medium. In other words, one or all of the information layers may be reflective films made of a metal such as an Ag or Al alloy. Finally, the reflective film materials listed here are merely examples of materials for information layers in read-only media, and can be replaced with other materials.

Of the two surfaces of the substrate 101, the first information layer 102 is disposed upon the surface on which the concavo-convex shape has been formed. The second information layer 103 is disposed upon the first information layer 102, with the first intermediate layer 105 being sandwiched therebetween. The third information layer 104, meanwhile, is disposed upon the second information layer 103, with the second intermediate layer 106 being sandwiched therebetween.

It is necessary for the second information layer 103 and the third information layer 104 to not only reflect laser light, but also to allow laser light to pass through to the information layer furthest from the laser light-entry side. Therefore, the second information layer 103 and the third information layer 104 are composed of a thin film material that is semitransparent with respect to laser light.

The light transmissibilities and reflectances of the first through third information layers 102-104 are set so that the amount of light that is reflected and returns to an optical head 116 is approximately the same for each information layer. In other words, the materials of which the layers are composed are selected so that the light transmissibility increases from the first information layer 102, to the second information layer 103, to the third information layer 104. To rephrase, the light transmissibility of the second information layer 103 is higher than that of the first information layer 102, and the light transmissibility of the third information layer 104 is higher than that of the second information layer 103. Note that "semitransparent" may be any light transmissibility that allows information to be recorded to each information layer and/or reproduced from recordings on each information layer, as described here, and is not limited to any specific numerical value.

The first and second intermediate layers 105 and 106 are composed of a transparent resin. Ultraviolet curable resin, for example, is used for this resin. The first intermediate layer 105 is disposed between the first information layer 102 and the second information layer 103, and the second intermediate layer 106 is disposed between the second information layer 103 and the third information layer 104.

The protective layer 107 is composed of a transparent resin, and is disposed upon the third information layer 104. In other words, the third information layer 104 is disposed between the protective layer 107 and the second intermediate layer 106.

In this manner, in the disk 115, the first information layer 102, the first intermediate layer 105, the second information layer 103, the second intermediate layer 106, the third information layer 104, and the protective layer 107 are disposed, in that order, upon the substrate 101. The outer surface of the protective layer 107 (that is, the surface on the side opposite to the surface that faces the third information layer 104) shall be referred to as "a protective layer surface 107a". It is preferable for the resin material of which the intermediate layers 105 and 106 and the protective layer 107 are composed to be approximately transparent with respect to the wavelength of the laser light. Here, "approximately transparent" refers to a transmissibility that is, preferably, 90% or more with respect to the wavelength of the laser light. A resin having a transmissibility of 90% or more with respect to light having a wavelength of, for example, 405 nm is thus preferable for use as the material of the intermediate layers 105 and 106 and the protective layer 107.

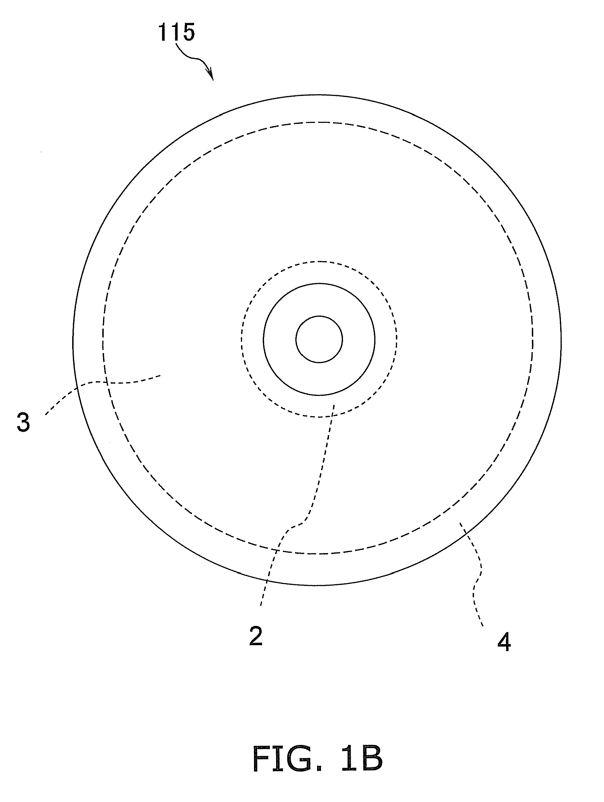

As shown in FIG. 1B, the disk 115 is disk-shaped, and has a lead-in area 2, a data recording area 3, and a lead-out area 4.

Information regarding the structure of the disk, information necessary when recording to the disk, data regarding the management information of the recorded data, and so on are recorded in the lead-in area 2. The lead-out area 4, meanwhile, is an area indicating the recording end position of the data. The data recording area 3 is an area onto which, for example, video, audio, or other software can be recorded as the primary information. The lead-in area 2 is normally located at the inside area of the disk. For example, the end of the lead-in area 2 is normally located at a radius of 24 mm from the center of the disk.

<1-1. Thicknesses of Each Portion>

<<1-1-1. Thicknesses from Protective Layer Surface to Each Information Layer>>

When a disk is inserted into a drive, the drive first reads management information recorded onto the innermost portion of the disk (a space from a radius of 23 mm to 24 mm). At that time, the drive makes optimal spherical aberration correction, focus offset adjustments, and so on within the area from a radius of 23 mm to 24 mm, and then performs recording learning. The optimal recording conditions are determined based on the result of the recording learning performed here.

Based on the determined recording conditions, the drive records to and/or reproduces other locations of the disk (particularly the data recording area). At this time, if the thicknesses from the protective layer surface to each of the information layers in the areas outside of a radius of 24 mm differ greatly from the thicknesses from the protective layer surface to each of the information layers in the area within a radius of 23 mm to 24 mm, the beam is not precisely focused, and thus the recording or reproduction precision is significantly influenced. For this reason, it is important, with respect to fluctuations in the thicknesses from the protective layer surface to each of the information layers, how much deviation from the average values of the thicknesses from the protective layer surface to each of the information layers in the area within a radius of 23 mm to 24 mm in the disk is allowed.

The fluctuation range of a thickness t3, from the protective layer surface 107a to the first information layer 102, is no more than $\pm 3$ $\mu$m (relative to the average value of the thickness t3 within the range from a radius 23 mm to 24 mm in the disk 115). Note that the "thickness t3" can be rephrased as "the distance from the protective layer surface 107a to the first information layer 102".

The fluctuation range of a thickness t4, from the protective layer surface 107a to the second information layer 103, is no more than $\pm 3$ $\mu$m (relative to the average value of the thickness t4 within the range from a radius 23 mm to 24 mm in the disk 115). Note that the "thickness t4" can be rephrased as "the distance from the protective layer surface 107a to the first information layer 102".

The fluctuation range of a thickness t5, from the protective layer surface 107a to the third information layer 104, is no more than $\pm 3$ $\mu$m (relative to the average value of the thickness t5 within the range from a radius 23 mm to 24 mm in the disk 115). Note that the "thickness t5" can be rephrased as "the distance from the protective layer surface 107a to the first information layer 102".

Note that in the present embodiment, the thickness 5 is the same as a thickness tc of the protective layer 107.
A high accuracy in the recording and readout of a signal is realized by ensuring the thicknesses t3 to t5 are within the ranges stated above. The basis for these ranges as well as other specific structures of the disk 115 shall be discussed later.

«1-1-2. Thicknesses of Intermediate Layers»

It is preferable for the thickness t1 of the first intermediate layer 105 to be different from the thickness tc of the protective layer 107 and for the difference between the thickness t1 of the first intermediate layer 105 and the thickness tc of the protective layer 107 to be no less than 1 $\mu$m, at all locations in the areas 2 to 4 within the disk 115.
The same applies to the second intermediate layer 106. In other words, it is preferable for the thickness t2 of the second intermediate layer 106 to be different from the thickness tc of the protective layer 107 at all locations in the areas 2 to 4. Furthermore, it is preferable for the difference between the thickness t2 of the second intermediate layer 106 and the thickness tc of the protective layer 107 to be no less than 1 $\mu$m, at all locations in the areas 2 to 4.
Furthermore, it is preferable for the difference between the thicknesses of the intermediate layers to be no less than 1 $\mu$m, at all locations in the areas 2 to 4.
Furthermore, it is preferable for the difference between one of the intermediate layers or the protective layer and the total of the other layers aside from that layer to be no less than 1 $\mu$m, at all locations in the areas 2 to 4. For example, it is preferable for the difference between the total thickness of all intermediate layers (t1 + t2) and the thickness tc of the protective layer 107 to be no less than 1 $\mu$m, and for the difference between the total of the thickness t2 of the second intermediate layer 106 and the thickness tc of the protective layer 107, and the thickness t1 of the first intermediate layer 105, to be no less than 1 $\mu$m
In other words, it is preferable for at least one, more preferable still for two or more, and even more preferable still for all of the following conditions (a) to (e) to be met at all locations in the areas 2 to 4 in the disk 115.

$$|t1 - tc| \geq 1\ \mu m \qquad (a)$$

$$|t2 - tc| \geq 1\ \mu m \qquad (b)$$

$$|t1 - t2| \geq 1\ \mu m \qquad (c)$$

$$|(t1 + t2) - tc| \geq 1\ \mu m \qquad (d)$$

$$|t1 - (t2 + tc)| \geq 1\ \mu m \qquad (e)$$

Note that in the present embodiment, the areas 2 to 4 are given as examples of "areas from which information can be reproduced using light". "Areas from which information can be reproduced using light" may also be referred to as "areas onto which reproducible information is recorded" or "areas onto which a signal can be recorded in a reproducible state".
The specific methods resulting in these formulas and the other structures of the disk 115 shall be discussed later.

[2. Disk Manufacturing Method]

A method using the aforementioned (i) through (v) can be favorably used as a method for manufacturing the disk 115 of the present embodiment.
For example, the first intermediate layer 105 and the second intermediate layer 106 can be formed by:

- coating the first information layer 102 or the second information layer 103 with an ultraviolet curable resin;
- pressing that resin with a stamper having guidance grooves composed of a concavo-convex shape;

- hardening the resin; and
- removing the stamper.

This method transfers the concavo-convex shape to the surface of the resin.

The protective layer 107 is also formed by coating the information layer with an ultraviolet curable resin.

[3. Recording and Reproduction Apparatus]

<3-1. Outline of Recording and Reproduction Apparatus>

Hereinafter, an apparatus capable of both recording and reproduction shall be described as an example of a recording and reproduction apparatus.

However, "recording and reproduction apparatus" refers to an apparatus that performs recording and/or reproduction, and therefore may be an apparatus that performs only reproduction, only recording, or both.

As shown in FIG. 1A, the recording and reproduction apparatus includes the optical head 116, and also includes a driving unit such as a motor, a control unit, a processing unit, and so on (not shown) as necessary.

<3-2. Optical Head>

The optical head 116 has an objective lens 108, an aberration correction unit 110, a light source 111, a polarizing beam splitter 112, and a photodetector 114.

A semiconductor laser with a wavelength of 405 nm can be favorably used as the light source 111. A lens with an NA of 0.85 is used as the objective lens 108. The aberration correction unit 110 may be configured of a combination lens including two or more lenses or configured of a collimate lens, and may include elements such as liquid-crystals.

Laser light 109 emitted from the light source 111 enters the polarizing beam splitter 112 having passed through the aberration correction unit 110. The laser light 109 that has passed through the polarizing beam splitter 112 is focused onto one of the information layers 102-104 by the objective lens 108. The light reflected from an information layer passes through the polarizing beam splitter 112 and is detected by the photodetector 114.

The processing unit of the recording and reproduction apparatus reads information from a signal outputted as a result of photoelectric conversion performed by the photodetector 114. Meanwhile, the control unit of the recording and reproduction apparatus records information onto the disk 115 using laser light.

In this manner, the recording and reproduction apparatus records and/or reproduces a signal by irradiating a disk with light. Although laser light in particular is given as an example of this light in the present specification, the term "laser light" is interchangeable with the terms "recording light", "reproduction light", "recording/reproduction light", and so on. "Recording light" refers particularly to light used in the recording of information, while "reproduction light" refers particularly to light used in the reproduction of information; "recording/reproduction light", meanwhile, refers to light used as recording light and/or reproduction light. The light irradiated onto a recording medium by the recording and reproduction apparatus is sometimes called "recording/reproduction light". Furthermore, "laser light" is sometimes referred to as a "beam".

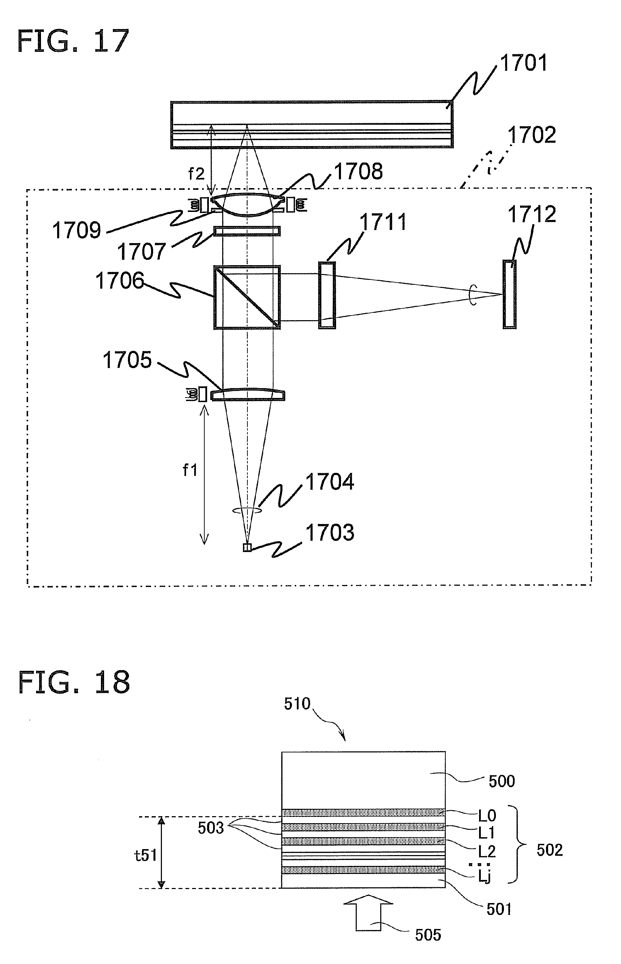

Referring to FIG. 17, an example of the optical head shall be described in more detail. Note that the various recording media described in the present specification (the disk 115 and so on) can be applied as a disk 1701 shown in FIG. 17. Note also that the basic configuration of the recording and reproduction apparatus is as shown in FIG. 1, and is not limited to the configuration described hereinafter.

As shown in FIG. 17, an optical head 1702 includes a light source 1703, a collimate lens 1705, a polarizing beam splitter 1706, a quarter wave plate 1707, an objective lens 1708, an aperture 1709, a cylindrical lens 1711, and a photodetector 1712.

The light source 1703 emits laser light 1704, which is a divergent beam of linearly-polarized light with a wavelength of 405 nm. The laser light 1704 emitted from the light source 1703 is transformed into parallel light by the collimate lens 1705, whose focal distance f1 is 18 mm, and then passes through the polarizing beam splitter 1706. After this, the laser light 1704 is transformed into circular polarized light by passing through the quarter wave plate 1707. The transformed laser light 1704 is further transformed into a convergent beam by the objective lens 1708, whose focal distance f2 is 2 mm, and is then collected upon the disk 1701.

The aperture of the objective lens 1708 is restricted by the aperture 1709. In the present embodiment, the numerical aperture NA is 0.85. In addition, an aberration correction control unit (not shown) configured of a stepping motor and the like adjusts the position of the collimate lens 1705 in the optical axis direction, so that the spherical aberration in the information layers is approximately 0 mλ.

The beam reflected by an information layer passes through the objective lens 1708. After this, the beam passes through the quarter wave plate 1707, thereby being transformed into linearly-polarized light 90 degrees different from that in the outgoing path. The linearly-polarized light is reflected by the polarizing beam splitter 1706. The beam reflected by the polarizing beam splitter 1706 is then divided by a diffraction grating, which is a beam dividing element, into zero-order light and first-order light, passes through the cylindrical lens 1711, and enters the photodetector 1712. The beam that enters the photodetector 1712 is given astigmatism upon passing through the cylindrical lens 1711.

Although in FIG. 17, the collimate lens 1705 is given as an example of the aberration correction unit, the aberration correction unit may be configured of a combination lens including two or more lenses or configured of a collimate lens, and may include elements such as liquid-crystals, as mentioned earlier.

The aberration correction unit plays the part of correcting aberration, such as spherical aberration, arising due to the thickness from the protective layer surface of the disk to the information layer to/from which information is recorded/reproduced. To be more specific, the aberration correction unit adds aberration to the laser light so as to counteract aberration components arising at each information layer.

The optical head was originally optically designed to minimize aberration at the information layer of a single-layer disk. Recent optical head designs, however, take recording/reproduction of dual-layer disks into consideration as well. Therefore, the position of minimum aberration, design-wise, is set to approximately 80 to 90 μm from the protective layer surface. For this reason, when concentrating laser light onto an information layer present in a location deviated from the position of minimum aberration, it is necessary for the aberration correction unit to make corrections using aberration correction values appropriate for that information layer.

Note that although the wavelength of the semiconductor laser used as the light source is set to 405 nm, the wavelength may change slightly due to the design, changes in temperature or driving current, or the like. Therefore, a wavelength range of 400 nm to 410 nm is permitted. The same effects as in the present embodiment can be obtained as long as the wavelength is within a range from 400 nm to 410 nm.

[4. Investigations into Structure of Disk]

<4-1. Thickness Measurement Method>

In the embodiments of the present application, "thickness" refers to a value measured by a thickness gauge including a confocal optical system. This gauge includes an optical head including a 405 nm-wavelength light source, an objective lens, a light shielding member, and a photodetector. The gauge further includes an actuator for moving the optical head and a calculation unit for calculating thicknesses. The light shielding member has a pinhole. The light shielding member is provided in the optical path along which reflected light travels from the disk to the photodetector.

The beam from the light source is concentrated upon the disk by the objective lens. The light reflected from the disk passes through the pinhole and is detected by the photodetector.

The gauge has an optical design whereby when the beam is focused upon a boundary surface within the disk, the reflected light is focused upon the surface of the photodetector. Therefore, light passes through the pinhole provided before the photodetector only when the beam is focused upon a boundary surface in the disk. If the beam is focused anywhere in the disk aside from a boundary surface, a major portion of the light will be blocked by the light shielding member. Therefore, whether or not the beam is focused on a boundary surface in the disk can be determined by measuring the optical intensity detected by the photodetector. Note that a "boundary surface in the disk" includes the boundary surfaces of each layer within the disk as well as the surface of the disk. In other words, the boundary surfaces of the information layers and the intermediate layers, and the surface of the protective layer, are considered "boundary surfaces in the disk".

The optical head of the gauge is moved by the actuator in the axial direction of the light irradiated onto the disk. When the beam is focused on each information layer, the calculation unit calculates the focus position based on the distance the optical head was moved by the actuator. The calculation unit can calculate the distance from the disk surface to an information layer, the distance between adjacent information layers, and so on based on this movement distance. In other words, the thicknesses of the protective layer and the intermediate layers are calculated by the calculation unit. Note that this gauge is calibrated to measure an accurate thickness when the refraction index N with respect to the wavelength of 405 nm for the intermediate layers or protective layer is 1.6. Thus the optical thickness will vary depending on the value of the refraction index N of the material from which the intermediate layers and protective layer are formed. Excluding the descriptions of the related art, the thickness values discussed in the present specification refer to thicknesses when the refraction index N has been converted to 1.6. In other words, the refraction index with respect to 405 nm-wavelength light differs depending on the type of the resin, and thus the discussions regarding thicknesses here concern numerical values obtained by converting the refraction index to 1.6.

"Thicknesses found when the refraction index N has been converted to 1.6" refers to the data measured by the stated thickness gauge when the refraction index N of each resin layer has been set to 1.6. When measuring the thicknesses of the resin layers using this thickness gauge, 1.6 x d/n is outputted as the measured data when the refraction index is set to 1.6. N is the refraction index of the resin when the wavelength is 405 nm, and d(μm) is the actual thickness.

With the exception of the descriptions of the related art, in the present specification, all references to "thickness values" refer to values obtained by this thickness gauge (under these thickness measurement conditions). In other words, with the exception of the descriptions of the related art, discussions of thicknesses in the present specification are not concerned with the actual thickness d.

<4-2. Layer Thicknesses>

The optimal design values for the thickness t1 of the first intermediate layer 105, the thickness t2 of the second intermediate layer 106, and the thickness tc of the protective layer 107 of the disk were investigated.

The relationship between the quality of a signal recorded onto two information layers that sandwich a intermediate layer when the thickness of that intermediate layer changes and the thickness of the intermediate layer was also examined.

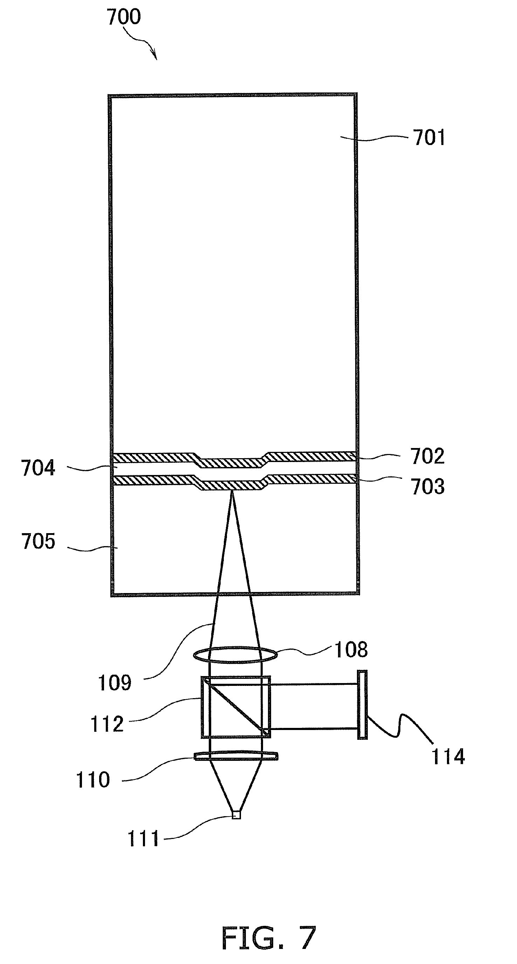

Note that the following evaluations were performed on a dual-layer disk 700 such as that shown in FIG. 7, in order to create a simple model of the influence of the thickness of a intermediate layer on interlayer crosstalk between the two information layers that sandwich that intermediate layer. The disk 700 includes a substrate 701, a first information layer 702, a second information layer 703, a intermediate layer 704, and a protective layer 705. The first information layer 702, the intermediate layer 704, the second information layer 703, and the protective layer 705 are layered in that order upon the substrate 701.

However, note that aside from the number of layers, the dual-layer disk 700 is the same as the three-layer disk 115. For example, the substrate 701, the information layers 702-703, the intermediate layer 704, and the protective layer 705 of the dual-layer disk 700 are composed of the same materials as the substrate 101, the information layers 102-104, the intermediate layers 105-106, and the protective layer 107 of the three-layer disk 115, respectively. Furthermore, the diameter and thickness of the dual-layer disk 700 are the same as those of the three-layer disk 115.

"Interlayer crosstalk" refers to a phenomenon in which noise enters the signal to be read when focusing laser light onto the information layer that is to be recorded to/reproduced. This is caused by a more concentrated beam being irradiated onto other layers due to the diameter of the beam spot on other information layers dropping, leading to stray light entering the information light. This interlayer crosstalk occurs particularly when the intermediate layer is thin.

In particular, in a disk including three or more information layers, "interlayer crosstalk" refers to noise entering into the signal due to laser light from a different adjacent information layer leaking into the reflected light from the information layer to be recorded or reproduced.

The inventors manufactured dual-layer disks with several different thicknesses in the intermediate layers, and used those disks in the following evaluations. However, all disks had a protective layer 705 with a thickness of 57 $\mu$m.

The evaluation method used was as follows. The inventors recorded a signal at a density of 25GB on each of the information layers 702 and 703 at the same radial position in each disk. The inventors then examined the jitter values of the signals.

"Jitter value" refers to the amount of deviation or fluctuation from the desired temporal position of the recorded signal. The lower the jitter value, the higher the reproduction quality of the signal.

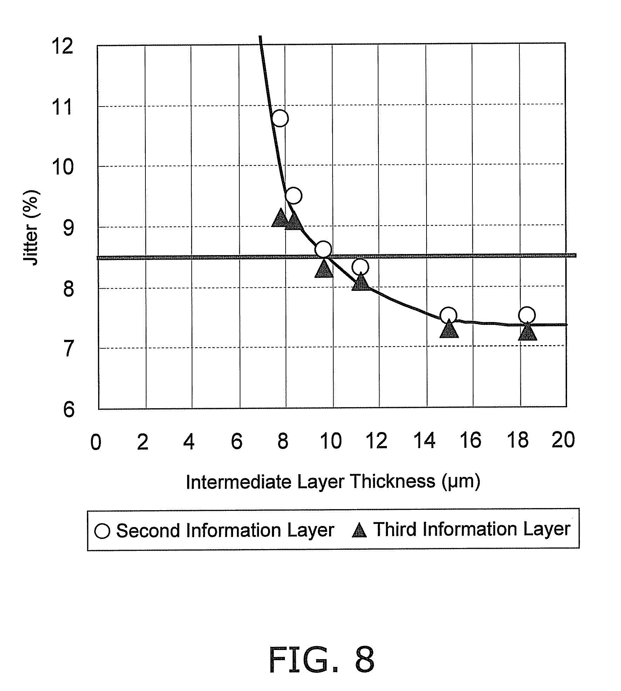

FIG. 8 illustrates the relationship between the thickness of the intermediate layer 704 and the reproduction properties of the signals recorded onto the first information layer 702 and the second information layer 703.

Note that the recording and reproduction of signals was performed at a linear speed of 4.9 m/s, and the jitter was evaluated in a state boosted by a limit equalizer. A jitter value of no more than 8.5% was used as a benchmark for determining the quality of the medium. If a jitter value in this range can be obtained, error correction can be performed with almost no problems, and is thus the quality of the signal in the disk is of a level that enables reproduction.

As shown in FIG. 8, the thinner the intermediate layer 704 is, the worse the jitter value becomes due to the influence of interlayer crosstalk in both the information layers 702 and 703. The jitter value becomes particularly poor when the thickness of the intermediate layer 704 is 10 $\mu$m or less. It is thus preferable for the thickness of the intermediate layer to be at least 10 $\mu$m in order to meet the criteria for jitter values.

Furthermore, as shown in FIG. 8, when the thickness of the intermediate layer is no less than 15 $\mu$m, almost no influence of the jitter value by interlayer crosstalk from the adjacent information layer was observed. Accordingly, it is preferable for the thickness of the intermediate layer to be no less than 15 $\mu$m.

Although FIG. 8 illustrates results of signal evaluation when the recording density is 25GB, note that it is preferable for the thickness of the intermediate layer to be no less than 15 $\mu$m regardless of the recording density. The reason for this is that degradation in the signal quality (specifically, degradation of jitter values) is caused by noise resulting from the occurrence of brightness/darkness continuity caused by interference between the information light from an information layer and reflected light from another layer aside from that information layer. A intermediate layer thickness of 15 $\mu$m or more circumvents a degradation in signal quality caused by an adjacent information layer, regardless of the signal recording density.

<4-3. Variability in Layer Thicknesses>

The results of investigating variability in the thicknesses of the intermediate layers and protective layer of the three-layer disk shall now be discussed. A value of 25 $\mu$m was desired for the thickness t1 of the first intermediate layer 105, a value of 18 $\mu$m was desired for the thickness t2 of the second intermediate layer 106, a value of 57 $\mu$m was desired for the thickness tc of the protective layer 107, and a value of 100 $\mu$m was desired for the thickness t3 from the protective layer surface 107a to the first information layer 102. The intermediate layers and protective layer were manufactured through an ultraviolet curable resin coating process using the spin coat method.

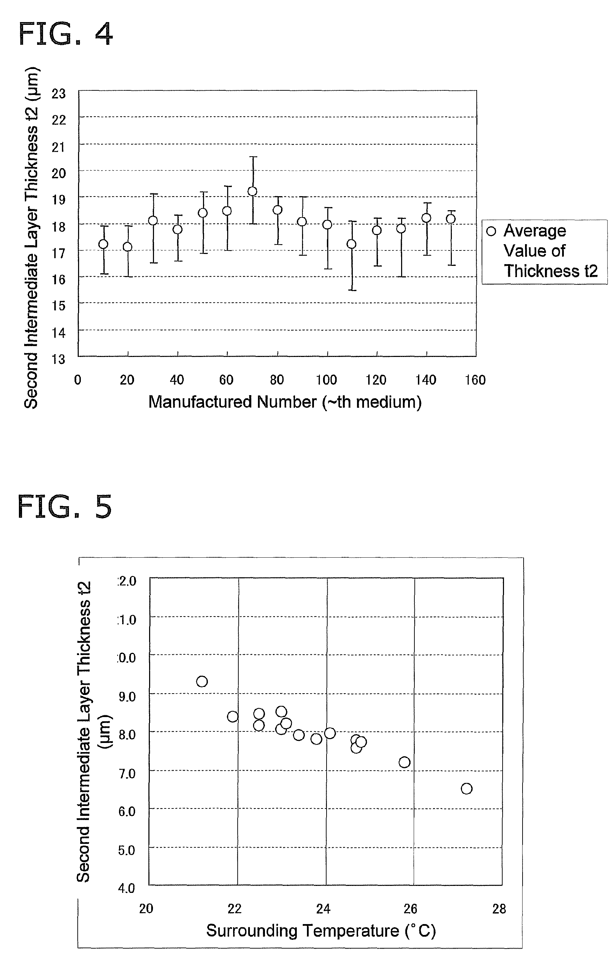

FIG. 4 illustrates the surface thickness distribution and thickness fluctuations from sample to sample in the thickness t2 of the second intermediate layer 106 of the manufactured disks.
The inventors manufactured 150 samples, removed every tenth disk therefrom, and measured the thickness of the intermediate layer. FIG. 4 illustrates the average thickness value within the surface of the second intermediate layer 106 of the disk, and also illustrates the maximum and minimum values in the surface using an error bar.
As shown in FIG. 4, there is variability in the thickness t2 of the second intermediate layer 106 in the surfaces of the individual disks.
The following occurrences can be given as examples of the causes of such variability.

- when the intermediate layer is formed through the spin coat method, the resin of which the intermediate layer is composed is drawn out due to the rotation of the spin table. At this time, the centrifugal force in the radial direction that is affected on the resin being spun differs depending on the position in the surface of the medium, which leads to variability in the resin thickness.
- similarly, when the intermediate layer is formed through the spin coat method, after the spinning has been stopped, the edges of the resin bulge outward due to the influence of surface tension in the resin at the edges of the region coated by the resin. This, too, results in variability in the thickness of the resin.
- variability in the thickness of the resin also arises due to resin flow occurring during pressing with a stamper following the resin coating.

The difference between the maximum and minimum values of the thickness t2 of the second intermediate layer 106 across the entire surface of the disk has, depending on conditions, a distribution of approximately 3 $\mu$m.
Various methods aside from the spin coat method can be considered as methods for forming resin layers such as the intermediate layers and protective layer, such as, for example, screen printing, gravure printing, or the like. However, although the shape of the thickness distribution is different, a thickness distribution of approximately 3 $\mu$m appears in the layers no matter what method is used.
Also, when the method for forming the layers includes a process of coating a liquid ultraviolet curable resin, the thickness of the layers is influenced by the surrounding environment of the coating apparatus; in particular, the influence of changes in the temperature and humidity is great. For example, the temperature of the ultraviolet curable resin increases with the surrounding temperature, causing a drop in the viscosity of the resin. When resin is coated using the spin coat method, for example, in such a state, the intermediate layer or protective layer that is formed will be thinner by the amount at which the viscosity dropped. Adding a temperature adjustment function to the coating apparatus itself can reduce the degree of thickness fluctuations due to changes in temperature. However, the influence of the temperature on the thickness of layers cannot be completely eliminated. Therefore, thickness variability appears among the multiple disks.
FIG. 5 illustrates the relationship between the surrounding temperature of the coating apparatus and the average surface value of the thickness t2 of the second intermediate layer 106. As can be seen in the data of FIG. 5, the thickness changes by approximately 0.5 $\mu$m for a change of approximately 1° C in the temperature.
The temperature within the coating apparatus easily changes by about 5-6° C due to temperature changes in the environment in which the apparatus is installed or temperature changes due to changes in the operating status of the apparatus. Temperature management of approximately 5-6° C can be realized in coating apparatuses used in the manufacture of conventional single-layer disks and dual-layer disks without requiring any special improvements in the temperature management precision. The thickness changes by approximately 3 $\mu$m with a temperature change of approximately 6° C. Combining the thickness variability within the surface of a single medium and thickness fluctuations from medium to medium results in a variability of as much as approximately 6 $\mu$m from the desired thickness. For this reason, under the influence of process-related fluctuation factor, the thickness of each intermediate layer or the thickness of the protective layer vary in approximately $\pm 3$ $\mu$m with respect to the desired thickness.
Although only the thickness t2 of the second intermediate layer is described here, the same effects were obtained for the thickness t1 of the first intermediate layer and the thickness tc of the protective layer. In other words, approximately $\pm 3$ $\mu$m relative to the desired thicknesses can be expected as the fluctuation amount of the thicknesses of the intermediate layers and protective layer. In other words, when mass-producing disks, the thicknesses of the intermediate layers may deviate from the desired thicknesses by approximately $\pm 3$ $\mu$m Therefore, it is preferable for the thicknesses of the intermediate layers in a three-layer disk to be set so as to accommodate such a fluctuation range.

<4-4. Difference in Layer Thicknesses>

Next, the results of evaluating the influence of interference caused my multilayer reflected light shall be discussed.
As described with reference to FIGS. 3A to 3C, when laser light is focused on an information layer to be read out, part of the stray light reflected by other layers is reflected in multiple by one of the information layers, the protective layer surface, or the like. This stray light sometimes enters the photodetector 114 of the optical head with the same optical path length and with the same beam diameter as the information light to be read out. In this case, the stray light components enter the photodetector having been reflected by multiple information layers, the protective layer surface, and so on, and thus have a much smaller light amount relative to the information light to be read out. However, these stray light components also enter the photodetector 114 with the same optical path length and with the same beam diameter as the information light, resulting in major influence on the amount of light received by the photodetector 114, caused by interference. Therefore, a minute change in the thicknesses of a intermediate layer or protective layer causes a major fluctuation in the amount of light received by the photodetector, making stable signal detection difficult.

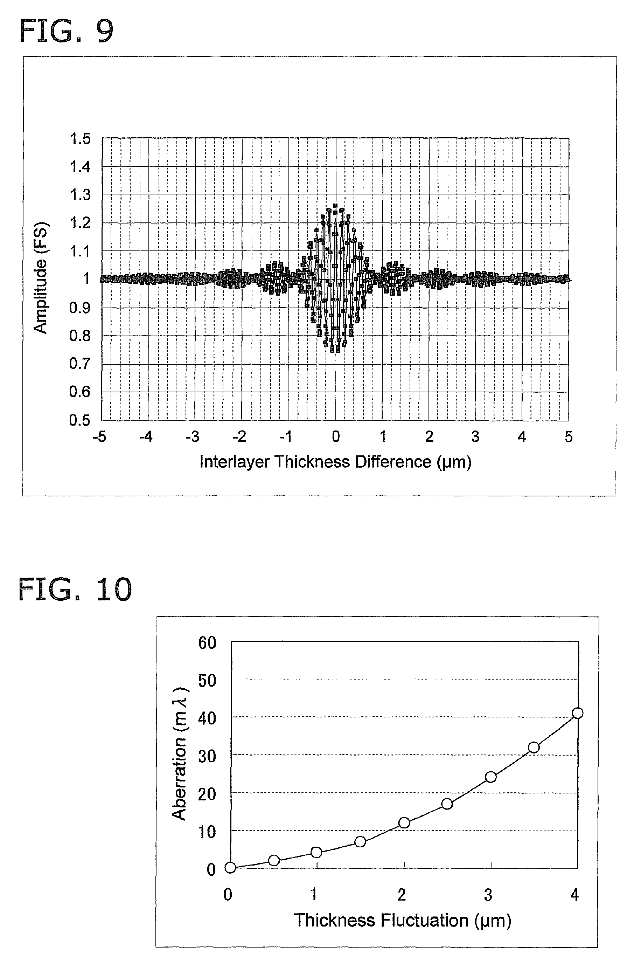

FIG. 9 illustrates the reproduced signal amplitude relative to the difference in inter-layer thicknesses when the light amount ratio of the information light to be read out to the stray light returning to the photodetector in patterns as shown in FIGS. 3A to 3B is 100:1. Note that "difference in inter-layer thicknesses" refers to the difference in the thicknesses between the first intermediate layer, the second intermediate layer, and the protective layer. In other words, the "state where the difference in thicknesses between layers is no less than 1 $\mu$m" referred to in FIG. 9 means that the differences between those three layers are all no less than 1 $\mu$m In other words, the difference in thickness between the first intermediate layer and the second intermediate layer, the difference in thickness between the second intermediate layer and the protective layer, and the difference in thickness between the protective layer and the first intermediate layer, or to put it differently, the difference in thicknesses between layers at which interference occurs, are all no less than 1 $\mu$m The horizontal axis in FIG. 9 represents the difference in interlayer thicknesses, whereas the vertical axis represents the reproduced signal amplitude. The reproduced signal amplitude is a value obtained by normalizing only the information light to be read out to a DC light amount found when the light is received by the photodetector. It can be seen in FIG. 9 that when the difference in interlayer thicknesses drops below 1 $\mu$m, the reproduced signal amplitude fluctuates dramatically.
With respect to three-layer disks, setting the recording capacity of a single information layer to 33.4 GB, which is greater than the recording capacity of a single information layer in a conventional dual-layer disk, has been proposed, thereby bringing the total recording capacity of the three-layer disk to 100 GB. There is demand to enable the use of such three-layer disks in conventional dual-layer disk drives without significantly altering the configuration thereof, such as the tracking mechanism. To meet such demand, it is preferable not to alter the pitch of the guidance grooves provided in the information layers of a three-layer disk from the pitch in conventional media such as dual-layer disks. Accordingly, setting the line density in the direction in which the laser light proceeds to 1.3 times the conventional density has been proposed to significantly increase the capacity of each information layer.
The mark length of a signal mark in a disk whose line density is approximately 1.3 times that of a conventional disk is 25% shorter than the mark length of a signal mark in the conventional disk (where the recording capacity of the conventional disk is 25GB). The SN ratio for the signal becomes comparatively lower as the signal mark becomes shorter, and thus the influence of noise on the signal properties becomes extremely great. Therefore, the fluctuation of the reproduced signal amplitude when the difference in interlayer thicknesses is no more than 1 $\mu$m causes significant degradation in the signal quality. Accordingly, a difference in interlayer thicknesses of no more than 1 $\mu$m is in no way allowable in a disk with this sort of high line density.
Therefore, as described thus far, it is preferable for the difference in thickness between the first intermediate layer and the second intermediate layer, the difference in thickness between the second intermediate layer and the protective layer, and the difference in thickness between the protective layer and the first intermediate layer to each be no less than 1 $\mu$m

<4-5. Back-Focus Issues>

Next, the results of examining the degree of influence of back-focus issues shall be discussed. In a three-layer disk, a total of four reflective boundary surfaces are present; namely, the first through third information layers, and the surface of the protective layer. When laser light is focused on one of the information layers, some of the stray light reflected by another reflective boundary surface is repeatedly reflected in multiple, and returns to the photodetector provided in the optical head. The stray light that returns to the photodetector always returns to the photodetector having been reflected by one of the boundary surfaces an odd number of times. The degree of influence of the stray light on the signal quality was evaluated for a pattern in which the stray light returns to the photodetector after three reflections and a pattern in which the stray light returns to the photodetector after five reflections. The evaluation results are as follows.

The reflectances and transmissibilities of each information layer are set so that the reflectances of each information layer are approximately the same when a signal is reproduced from each information layer. For this reason, the reflectance of an information layer is increased and the transmissibility is reduced the closer that information layer is to the first information layer. In the disk 115, or in other words, in a state in which the layers are layered upon one another, the reflectances of each layer with respect to the light from the optical head are set to approximately 2 to 5%.

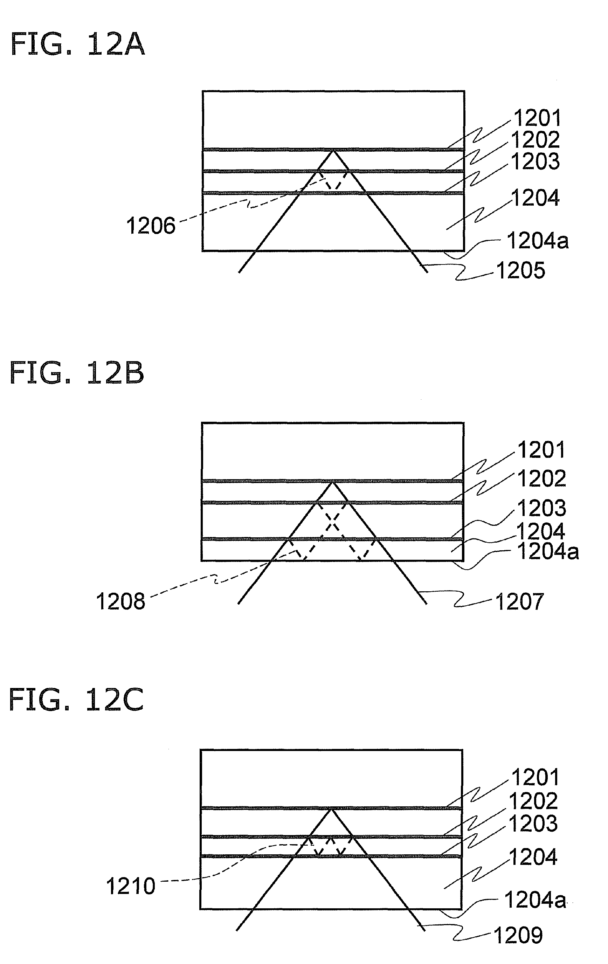

FIGS. 12A to 12C illustrate an example of back-focus issues that can arise with three reflections and back-focus issues that can arise with five reflections. The disk shown in FIGS. 12A to 12C is a three-layer disk that has first through third information layers 1201 to 1203 and a protective layer 1204.

The reflectances of the information layers are set so as to increase as they progress toward the first information layer 1201. The amount of stray light that returns to the photodetector is greater when multiple reflections occur at the second information layer 1202 or the third information layer 1203 than when the reflection occurs at the protective layer surface 1204a.

<<4-5-1. Pattern 1>>

For example, in FIG. 12A, when laser light is focused on the first information layer 1201, stray light is reflected by the second information layer 1202, the third information layer 1203, and the second information layer 1202, and is then detected by the photodetector. In other words, in this pattern, the stray light is reflected three times.

The second information layer 1202 and third information layer 1203 have higher reflectances than the protective layer surface 1204a. In the pattern shown in FIG. 12A, the stray light is reflected in multiple between the information layers 1202 and 1203. Therefore, of the patterns of three reflections that can conceivably occur, the pattern shown in FIG. 12A results in the largest amount of stray light relative to the amount of reflected light from the first information layer 1201 on which the laser light is focused. In the pattern shown in FIG. 12A, the amount of stray light is approximately 1.4% of the amount of information light from the first information layer 1201.

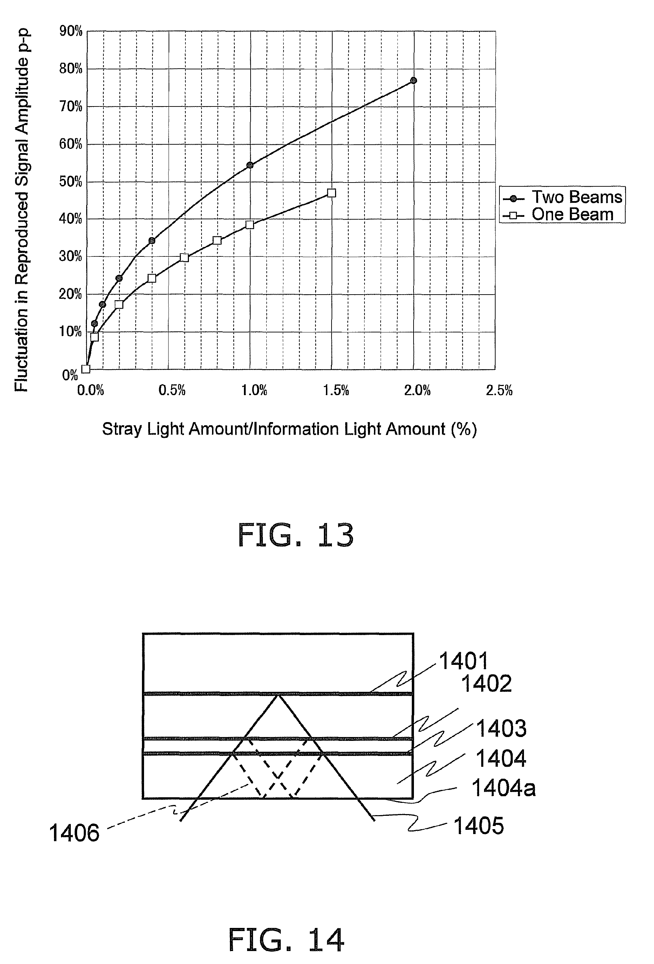

FIG. 13 illustrates the relationship between the ratio of the amount of stray light to the amount of information light and the fluctuation range of the reproduced signal amplitude. Because the amount of stray light is approximately 1.4% of the amount of information light in the pattern shown in FIG. 12A, the amplitude of the reproduced signal fluctuates by about 45%, according to the graph represented by the white squares in FIG. 13.

«4-5-2. Pattern 2»

In the pattern shown in FIG. 12B, when laser light is focused on the first information layer 1201, stray light traverses the second information layer 1202, the protective layer surface 1204a, and the third information layer 1203, and then returns to the photodetector. In this pattern, at the same time, stray light that traverses the third information layer, the protective layer surface, and the second information layer, and then returns to the photodetector, arises. Thus in the pattern in FIG. 12B, two types of stray light return to the photodetector, and thus the amount of stray light is approximately 0.87% of the amount of information light. The ratio of the amount of stray light to the amount of information light is thus high, and thus the influence exerted on the amplitude of the reproduced signal by the stray light is great.

The black square graph shown in FIG. 13 illustrates the relationship between the fluctuation of the amplitude of the reproduced signal when two beams of stray light arise, as shown in FIG. 12B, and the ratio of the amount of stray light to the amount of information light. In a pattern in which two beams of stray light return to the photodetector, such as that shown in FIG. 12B, when the amount of stray light is approximately 0.87% of the amount of information light, the reproduction signal amplitude fluctuates by approximately 50%, as seen in FIG. 13.

«4-5-3. Pattern 3»

Next, the influence of stray light reflected five times on the amplitude of the reproduced signal shall be evaluated. As described above, the second information layer 1202 and third information layer 1203 have higher reflectances than the protective layer surface 1204a. Therefore, the amount of stray light that returns to the photodetector is greater with stray light reflected by the second information layer 1202 or the third information layer 1203 than stray light reflected by the protective layer surface 1204a. As a result, the pattern shown in FIG. 12C, where the stray light returns having been reflected five times, results in the greatest amount of stray light. In FIG. 12C, when laser light is focused on the first information layer 1201, stray light traverses the second information layer 1202, the third information layer 1203, the second information layer 1202, the third information layer 1203, and the second information layer 1202, and then returns to the photodetector.

In the pattern in FIG. 12C, the amount of stray light is approximately 0.02% of the amount of information light. The fluctuation in the amplitude of the reproduced signal in the pattern shown in FIG. 12C, estimated based on FIG. 13, is approximately 2 to 3%. Such a degree of fluctuation does not greatly affect the quality of the signal. Therefore, stray light that returns to the photodetector having been reflected five times can be ignored.

Based on the above investigations, it is clear that the quality of the signal degrades due to back-focus issues particularly when stray light returns to the photodetector having been reflected three or fewer times by one or multiple information layers and/or the protective layer surface.

«4-5-4. Influence on Signal of Stray Light Reflected Three Times»

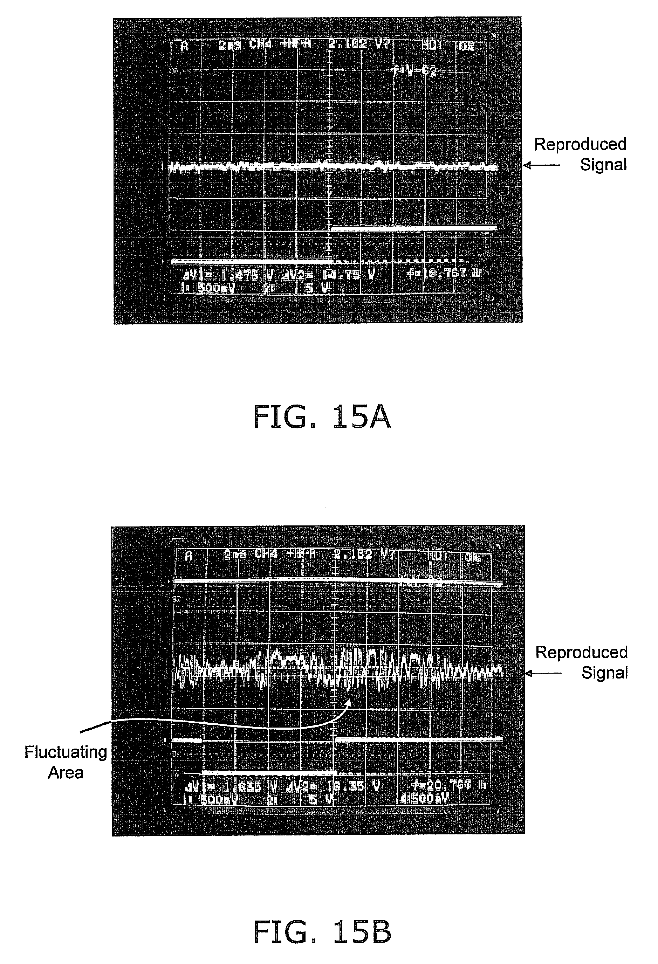

FIG. 15B illustrates the fluctuation of the reproduced signal amplitude in the case where stray light returning to the photodetector having been reflected three times interferes with the information light. FIG. 15B particularly illustrates the fluctuation of the reproduced signal amplitude occurring in the pattern shown in FIG. 14, which has three reflections.

FIG. 14 illustrates the structure of a three-layer disk having first to third information layers 1401 to 1403 and a protective layer 1404. In FIG. 14, some of the stray light is reflected a total of three times, by the third information layer 1403, the protective layer surface 1404a, and the second information layer 1202. Some of the stray light enters the photodetector with the same optical path length and the same beam diameter as information light from the first information layer 1401 on which a signal to be read out has been recorded. FIG. 15B illustrates the fluctuation in the reproduced signal amplitude occurring due to the influence of stray light entering the photodetector in this manner.

FIG. 15A illustrates the waveform of a reproduced signal of a disk whose protective layer is approximately 3 $\mu$m thicker than that of the disk shown in FIG. 14. Although some stray light is reflected three times in this disk as well, in a manner similar to the state shown in FIG. 14, the optical path length of the stray light is shifted from the optical path length of the information light from the first information layer 1401, thereby eliminating the influence of interference.

Furthermore, the inventors examined to what degree the optical path length of the stray light needed to be shifted from the optical path length of the information light to be read out in order to eliminate the influence of interference. Regions in which the fluctuation of the amplitude is great, and regions in which the fluctuation of the amplitude is low, are both present in the reproduced signal waveform shown in FIG. 15B. In FIG. 15B, a region in which the fluctuation of the amplitude is great is referred to as a "fluctuating area".

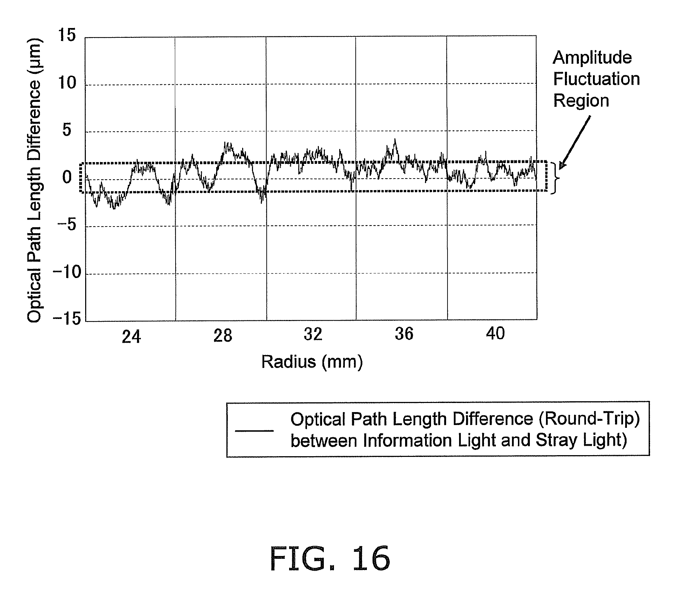

FIG. 16 illustrates the results of comparing the optical path length of information light with the optical path length of stray light in the fluctuating area and the other areas. In FIG. 16, the horizontal axis represents the radius of the disk. Meanwhile, in FIG. 16, the vertical axis represents the difference between the optical path length of information light and the optical path length of stray light reflected three times, as shown in FIG. 14. "Optical path length of information light" refers to the round-trip optical path length, from when laser light enters from the protective layer surface to when that light exits the protective layer surface as information light.

Portions of the vertical axis in FIG. 16 in which the optical path length difference between the information light and the stray light is 0 indicate conditions where the information light and stray light return to the photodetector with the same optical path length and the same beam diameter. However, it was understood, based on the data shown in FIG. 16, that the signal amplitude experiences significant fluctuation not only in areas where the optical path length difference is 0, but also in areas where the optical path length difference is 0 $\pm 2$ $\mu$m. Such areas are referred to as "amplitude fluctuation areas" in FIG. 16. Based on these results, an optical path length difference of no less than $\pm 2$ $\mu$m was understood to be preferable. Note that "an optical path length difference of no less than $\pm 2$ $\mu$m" means that the absolute value of the optical path length difference is no less than 2 $\mu$m.

<4-6. Structure Capable of Preventing Interference>

Next, specific conditions for ensuring that the difference in optical path lengths of the information light and stray light is no less than $\pm 2$ $\mu$m shall be described.

With a disk having three information layers, when laser light is focused on the information layer disposed deeper than the third information layer (on the side opposite to the light-entry side), the following two patterns of stray light problems can occur. Note that in the following descriptions, the information layer that is the target of signal recording or reproduction shall be referred to as the "target information layer".

«4-6-1. First Stray Light Problem»

The first stray light problem is a problem that arises due to stray light being reflected a total of three times, by an information layer B disposed on the light-entry side of the target information layer A, then by an information layer C on the light-entry side or the protective layer surface, and then again by the information layer B, in that order. To be more specific, the first stray light problem involves interference occurring between the information light and the stray light when the round-trip optical path length difference between the stray light and the information light that returns to the optical head from the target information layer A is less than 2 μm.

This first stray light problem is solved by setting the difference between the thickness between the target information layer A and the information layer B and the thickness between the information layer B and the information layer C/the protective layer surface to no less than 1μm. Note that "thickness" refers to the thickness as measured by a thickness gauge, as mentioned above.

To be more specific, if the target information layer is the first information layer 102 in the disk 115 illustrated in FIG. 1A, it is preferable for the following conditions (1) to (3) to be met in order to solve the first stray light problem, or in other words, in order to prevent interference between the information light and the stray light.

$$(1) \quad |t1 - t2| \geq 1 \ \mu m$$

Interference between the information light and stray light reflected by the second information layer 103, the third information layer 104, and the second information layer 103, in that order, is prevented by meeting this condition (1).

$$(2) \quad |t1 - (t2 + tc)| \geq 1 \ \mu m$$

Interference between the information light and stray light reflected by the second information layer 103, the protective layer surface 107a, and the second information layer 103, in that order, is prevented by meeting this condition (2).

$$(3) \quad |(t1 + t2) - tc| \geq 1 \mu m$$

Interference between the information light and stray light reflected by the third information layer 104, the protective layer surface 107a, and the third information layer 104, in that order, is prevented by meeting this condition (3).

Furthermore, if the target information layer is the second information layer 103, it is preferable for the following condition (c) to be met in order to prevent interference between the information light and the stray light.

$$(4) \quad |t2 - tc| \geq 1 \ \mu m$$

Interference between the information light and stray light reflected by the third information layer 104, the protective layer surface 107a, and the third information layer 104, in that order, is prevented by meeting this condition (4).

«4-6-2. Second Stray Light Problem»

The second stray light problem is a problem that arises due to stray light being reflected a total of three times, by an information layer b on the light-entry side of a target information layer a, then by the protective layer surface, and then again by an information layer c on the light-entry side of the information layer b, in that order. To be more specific, the second stray light problem involves interference occurring between the information light and the stray light when the round-trip optical path length difference between the stray light and the information light that returns to the optical head from the target information layer a is less than 2 μm. Note that when the second stray light problem arises, stray light reflected a total of three times, by the information layer b, the information layer c, and the protective layer surface, in that order, also arises. Therefore, interference caused by two beams occurs in the second stray light problem.

The second stray light problem is solved by setting the difference between the thickness between the information layer a and the information layer b, and the thickness between the information layer c and the protective layer surface, to be no less than 1 μm.

To be more specific, if the target information layer is the first information layer 102 of the disk 115, it is preferable for the following condition (e) to be met in order to prevent interference between the information light and the stray light.

$$(5) \quad |t1 - tc| \geq 1\mu m$$

Interference between the information light and stray light reflected by the second information layer 103, the protective layer surface 107a, and the third information layer 104, in that order, is prevented by meeting this condition (5). At the same time, interference between the information light and stray light reflected by the third information layer 104, the protective layer surface 107a, and the second information layer 103, in that order, is also prevented.

<4-7. Thickness of Protective Layer>

The relationship between the thickness of the protective layer and a signal recorded to an information layer/a signal reproduced from an information layer shall be evaluated. There is a high likelihood that foreign objects such as dirt, dust, or fingerprints will adhere to the surface of the protective layer, or that the surface of the protective layer will be scratched.

When such blemishes are present on the surface of the protective layer, the laser light for recording a signal to the information layers or reproducing a signal from the information layers is blocked, the angle at which the laser light enters changes, and so on. The quality of the signal recorded to or reproduced from the information layer is greatly influenced as a result.

Meanwhile, the thinner the protective layer becomes, the smaller the diameter of the laser light is on the protective layer surface when the laser light is focused on an information layer. Furthermore, the smaller the diameter of the laser light is on the protective layer surface, the greater the influence of foreign objects or scratches on the protective layer surface is on the quality of the signal. The reason for this is that the smaller the diameter of the laser light, the greater the size of the foreign objects or scratches is relative to the diameter of the laser light, even if those foreign objects or scratches are the same size in reality. Thus a greater percentage of the total amount of laser light is blocked by the foreign objects or scratches.

Accordingly, the following experiments were performed, and the optimal thickness of the protective layer was examined. In other words, the inventors manufactured five types of single-layer disks having different protective layer thicknesses within a range from 100 $\mu$m to 45 $\mu$m. The information layers in these single-layer disks had the same configuration as the third information layer of the three-layer disk 115. The inventors imparted artificial fingerprints on the protective layer surface of these single-layer disks. The inventors then evaluated the influence of those artificial fingerprints on the recording to and reproduction from the information layer by examining the error rate. Note that the recorded signal was a random-pattern signal modulated according to the 1-7PP modulation technique, with a reference clock frequency of 66 MHz and a minimum mark length of 149 nm, and the recording/reproduction linear speed was set to 4.9 m/s.

The evaluation method used was as follows. A signal was recorded to and reproduced from a disk whose protective layer surface was imparted with an artificial fingerprint liquid, and the symbol error rate was evaluated. The artificial fingerprint liquid was manufactured by mixing standard dust as represented by Kanto loam with Triolein, and is used in the evaluation of the surface properties of the protective layer.

This artificial fingerprint liquid was imparted onto the protective layer surface using a rubber stamp, being transferred from an artificial fingerprint pad. The area of impartation had a diameter of approximately 10 mm, central to the vicinity of a radius of 38 mm on the disk. A signal was recorded to and reproduced from the disk at five positions at different distances from the center of the disk, within that impartation area. The SER (Symbol Error Rate) was evaluated for the signals recorded at each position. Disks with an error rate where the SER was no more than $4.2 \times 10^{-3}$ were determined as passing. The error rate value used as the benchmark for passing/failing is a level at which there is the possibility that information cannot be read out from one disk out of one million. The optical information recording medium is considered to have no problems with regards to recording and reproduction properties if the SER is no more than this error rate value.

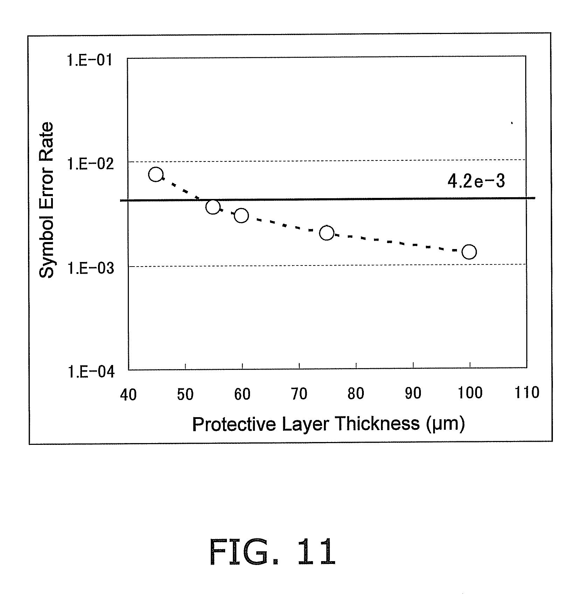

FIG. 11 is a graph illustrating the relationship between the protective layer thickness and the SER. In FIG. 11, the worst data (that is, the highest SER) has been selected as the SER for each thickness, from the evaluation results obtained when the impartation location of the fingerprint is alternated among five different radii in each disk of a certain thickness.

Based on these results, it was understood that the SER did not exceed $4.2 \times 10^{-3}$ as long as the protective layer thickness was no less than approximately 51 $\mu$m. Therefore, it is preferable for the thickness tc of the protective layer 107 to be no less than 51 $\mu$m in the disk 115. Furthermore, the greater the thickness tc of the protective layer is, the less likely it is for the disk to be influence by fingerprints imparted on the surface. It is thus preferable for the thickness tc of the protective layer to be as great as possible.

<4-8. More Specific Values for Thicknesses of Each Layer>

Based on the above results, it is preferable for the thickness t1 of the first intermediate layer 105 and the thickness t2 of the second intermediate layer 106 to be no less than 15 μm and to have a thickness fluctuation range of 6 μm. Furthermore, it is preferable for the difference in thicknesses between intermediate layers to be no less than 1 μm. Moreover, it is preferable for the thicknesses of the intermediate layers to be no less than 15 μm and no more than 21 μm, or no less than 22 μm and no more than 28 μm, in order to make the protective layer as thick as possible. All of the above conditions can be met as long as the thicknesses of the intermediate layers are within that range.

Taking into consideration compatibility with conventional single-layer Blu-ray disks and dual-layer Blu-ray disks, it is preferable, in the three-layer disk 115, for the thickness t3, from the protective layer surface 107a to the first information layer 102 furthest from the optical head, to be 100 μm, and for the thickness t4, from the surface 107a to the second information layer 103, to be 75 μm. These numerical values are the same as those of the thicknesses from the protective layer surface to the first information layer and second information layer in a conventional dual-layer disk. Thus, by providing a three-layer disk with the first information layer and the second information layer within the same range as the information layers in a dual-layer disk, recording and reproduction to and from a three-layer disk can be implemented by a conventional drive without requiring significant modifications thereto.

For this reason, it is preferable for the thickness t1 of the first intermediate layer 105 to be 22 μm ≤ t1 ≤ 8 μm, and for the thickness t2 of the second intermediate layer 106 to be 15 μm ≤ t2 ≤ 21 μm.


<4-9. Fluctuation Range of Thickness from Protective Layer Surface to Information Layers, Thickness of Intermediate layers, and Thickness of Protective Layer>

The inventors examined the degree of fluctuation allowable in the thickness from the protective layer surface to each information layer. The thickness from the protective layer surface to the first information layer located furthest from the optical head is 100 μm in conventional Blu-ray disks with both single-layer and dual-layer constructions.

It is also preferable for the thickness t3 up to the first information layer 102 to be 100 μm in the three-layer disk 115 as well. This is to ensure that when the three-layer disk 115 is inserted into a drive, the information layer upon which light is focused first is the first information layer 102; by setting this thickness to the same thickness as that in a single-layer disk and a dual-layer disk, such compatibility is ensured.

Furthermore, when a disk is inserted, the drive performs the actual focusing operations after first performing spherical aberration correction using the aberration correction unit, so that the beam is concentrated most on a location that is at a thickness (depth) of 100 μm from the disk surface. Therefore, if the actual location of the first information layer 102 is shifted 100 μm from the location of the protective layer surface 107a when the focusing operations are commenced after aberration correction for concentrating the beam the most on a location of 100 μm has been performed, there is a drop in the amplitude level of a focus error signal used in focusing. As a result, there is an increased likelihood that the focusing operations of the drive will fail.

The inventors examined the actual range at which operations for focusing on the first information layer 102 can be performed in a stable manner by shifting the thickness t3, from the protective layer surface 107a to the first information layer 102, to greater and less than 100 μm. As a result, no problems occurred in focusing as long as the thickness t3 was within a range of 100 μm ±6 μm. If the thickness is no less than ±6 μm from 100 μm, the level of the focus error signal drops to less than half of its level, making it difficult to perform focusing operations in a stable manner.

With respect to the second information layer 103 and the third information layer 104, when performing operations for switching between information layers, the drive first performs aberration correction according to the thicknesses from the protective layer surface 107a to each information layer, and then performs operations for switching to each information layer. In the aberration correction, the central values of the thicknesses to each information layer are used as the thickness to each information layer. Therefore, it is difficult to perform focusing operations in a stable manner if the thicknesses from the protective layer surface are no less than ±6 μm from the desired value for the second information layer and the third information layer as well.

Such values pre-set as the thicknesses from the protective layer surface to each information layer in the aberration correction are called "desired central values". The centers of the fluctuation ranges of the thicknesses of each intermediate layer for matching the desired central values of the thicknesses from the protective layer surface to each information layer are also called "desired central values".

Based on the results of the above examinations, it is preferable for the thickness t1 of the first intermediate layer 105 to be 22 μm ≤ t1 ≤ 28 μm. The desired central value of the thickness t1 is thus 25 μm.

Meanwhile, it is preferable for the thickness t2 of the second intermediate layer 106 to be 15 μm ≤ t2 ≤ 21 μm. If the thickness t2 is of this range, the desired central value of the thickness t2 is 18 μm.

Furthermore, it is preferable for the desired central value of the thickness t3 from the protective layer surface 107a to the first information layer 102 to be 100 μm. If the thickness t3 is of this range, the desired central value of the thickness tc of the protective layer 107 is 57 $\mu$m.

In addition, with respect to the thickness t3 from the protective layer surface 107a to the first information layer 102, a fluctuation range of $\pm 6$ $\mu$m is allowable for the desired central value. Thus, when the desired central value of the thickness t3 is 100 $\mu$m, it is preferable for the thickness t3 to be 94 $\leq$ $\mu$m t3 $\leq$ 106 $\mu$m.

Furthermore, it is preferable for the desired central value of the thickness t4 from the protective layer surface 107a to the second information layer 103 to be 75 $\mu$m. With respect to the thickness t4, a fluctuation range of $\pm 6$ $\mu$m is allowable for the desired central value. Thus, it is preferable for the thickness t4 to be 69 $\mu$m $\leq$ t4 $\leq$ 81 $\mu$m.

Furthermore, it is preferable for the desired central value of the thickness t5 from the protective layer surface 107a to the third information layer 104, or in other words, the thickness tc of the protective layer 107, to be 57 $\mu$m. With respect to the thickness t5, a fluctuation range of $\pm 6$ $\mu$m is allowable for the desired central value. Thus, it is preferable for the thickness t5 to be 51 $\mu$m $\leq$ t5 $\leq$ 63 $\mu$m.

If the intermediate layers 105 and 106 and the protective layer 107 fit within the stated thickness ranges, the difference in thickness between the intermediate layers and the difference in thickness between each intermediate layer and the protective layer, is no less than 1 $\mu$m. The occurrence of back-focus issues is prevented thereby.

Next, the manner in which the thicknesses from the protective layer surface to each of the information layers fluctuate in a three-layer disk manufactured by layering a first intermediate layer, a second intermediate layer, and a protective layer shall be discussed.

In a three-layer disk, even if the desired central value of the thickness from the protective layer surface to the information layer furthest therefrom is set to 100 $\mu$m, in the same manner as the resin layers in single-layer disks and dual-layer disks, the fluctuation range of the thickness across the entire surface of the medium increases along with the number of layers. This is because the intermediate layers and protective layer are manufactured individually, and thus the thickness fluctuation for each layer accumulates as the number of layers increases.

Meanwhile, the manner in which the thicknesses from the protective layer surface to each information layer change relative to the thickness of the innermost portion of the medium is extremely important. The reason for this is as follows.

When a disk is inserted into a drive, the drive first reads management information recorded onto the innermost portion of the disk (a space from a radius of 23 mm to 24 mm). At that time, the drive makes optimal spherical aberration correction, focus offset adjustments, and so on within the area from a radius of 23 mm to 24 mm, and then records to and/or reproduces from the other locations of the disk (particularly the data recording area). At this time, if the thicknesses from the protective layer surface to each of the information layers in the areas outside of a radius of 24 mm differ greatly from the thicknesses from the protective layer surface to each of the information layers in the area within a radius of 23 mm to 24 mm, the beam is not precisely focused, and thus the recording or reproduction precision is significantly influenced. For this reason, it is important, with respect to fluctuations in the thicknesses from the protective layer surface to each of the information layers, how much deviation from the average values of the thicknesses from the protective layer surface to each of the information layers in the area within a radius of 23 mm to 24 mm in the disk is allowed.

As mentioned earlier, with respect to three-layer disks, there is demand to increase the recording capacity of a single information layer to a capacity greater than that of conventional dual-layer disks. There is also demand to enable the use of such three-layer disks in conventional dual-layer disk drives without significantly altering the configuration thereof, such as the tracking mechanism. Accordingly, setting the line density in the direction in which the laser light used in recording or reproduction proceeds to 1.3 times the conventional density has been proposed to increase the capacity of each information layer.

When the line density is approximately 1.3 times, the mark length of the signal marks becomes 25% shorter than the conventional mark length, as mentioned above. When the mark length decreases, the concentration performance of the beam exerts a much greater influence on the precision at which signals are recorded or reproduced. In particular, short marks such as the shortest mark are of a size that is near the optical limit for recording or reproduction by the optical head, and thus if the concentration performance of the beam drops due to thickness fluctuations, the quality of the signal will also drop significantly. For this reason, in a three-layer disk, it is necessary to control the variability in the thickness of all other areas with respect to the average thickness value of the area from a radius of 23 mm to 24 mm at a much higher precision than in conventional dual-layer disks.

With respect to the thickness variability in a conventional dual-layer disk, a variability of $\pm 2$ $\mu$m for a readable/ writable medium and a variability of $\pm 3$ $\mu$m for a read-only medium is allowable relative to the average thickness value from a radius of 23 mm to 24 mm.

As mentioned earlier, the intermediate layers and the protective layer are manufactured individually, and thus the differences in the fluctuation distributions of the thicknesses within the surfaces thereof accumulate as layers are added. In other words, the greater the number of resin layers (intermediate layers and the protective layer) that are layered, the greater the thickness fluctuation becomes within the surface of the medium. Taking the precision of the control of thickness fluctuations in a conventional dual-layer disk into consideration, a thickness fluctuation of approximately 3.5 $\mu$m is estimated for an increase of one intermediate layer and a resulting total of three resin layers. In other words, the range of variability in thickness can be thought of as approximately $\pm 3.5$ $\mu$m.

However, the setting values with respect to spherical aberration are optimized within a range from a radius of 23 mm to 24 mm in the disk, as mentioned earlier. Thus, a high degree of spherical aberration occurs in positions of the disk in which the thickness has shifted by 3.5 $\mu$m from thicknesses in this range. This high degree of spherical aberration causes an extreme drop in the recording and reproduction quality.

FIG. 10 shows the results of calculating the aberration components that occur due to thickness fluctuations. As shown in FIG. 10, a worsening in aberration, to the degree of approximately 32 m$\lambda$, is expected when the thickness fluctuation reaches $\pm$3.5 $\mu$m. When this 32 m$\lambda$ worsening in the aberration occurs, the margin in which the drive can record or reproduce is consumed to a great extent, making it impossible to implement the recording and reproduction system. It is thus preferable to restrict the worsening in the aberration to at least approximately 25 m$\lambda$ in order for the drive to record and reproduce in a stable manner. In other words, it is preferable for the range of thickness fluctuation to be no more than $\pm$3 $\mu$m.

However, although it is preferable to strictly control the thickness fluctuation range in such a manner, it is also preferable to use the manufacturing method for conventional dual-layer disk to the greatest extent possible as the manufacturing method for the present disk as well. In other words, there is demand for suppressing thickness fluctuations to within a predetermined range by improving the manufacturing system for resin layers in conventional manufacturing methods.

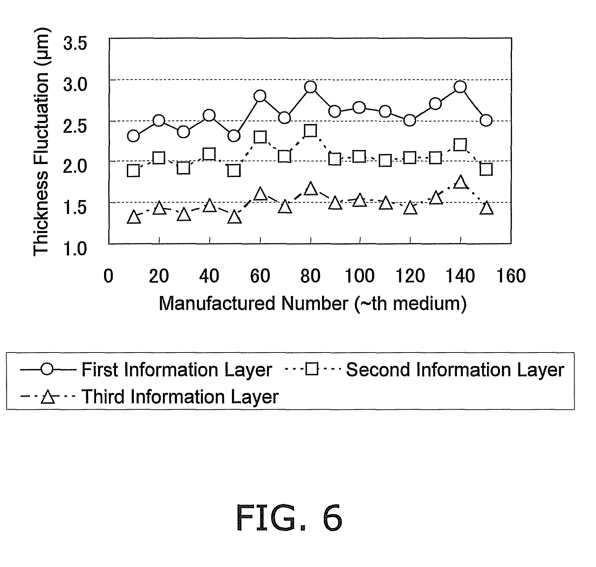

The inventors thus implemented stricter management of the viscosity of the ultraviolet curable resin for forming the resin layers and stricter management of the temperature of the coating apparatus than is implemented when manufacturing a conventional dual-layer medium. The inventors also restricted the thickness fluctuation in the circumference outside of a radius of 50 mm, where fluctuations particularly occur, by optimizing the program for the coating process. As a result, the inventors succeeded in attaining the desired values for thickness fluctuation in a three-layer medium. FIG. 6 illustrates the results of manufacturing 150 three-layer disks and measuring the fluctuation range of the thicknesses from the protective layer surface to each information layer across the entire medium, relative to the average thickness value in the area from a radius of 23 mm to 24 mm.

For each manufactured disk, the value of the thickness that was shifted the most from the average thickness value in the radius from 23 mm to 24 mm was taken from among the thicknesses from the protective layer surface to each information layer, and that value was employed as the thickness variability value. In a three-layer disk, three resin layers, or the first intermediate layer, the second intermediate layer, and the protective layer, are present between the first information layer and the protective layer surface. In other words, more layers are present between the protective layer surface and the first information layer than between the protective layer surface and the second information layer, and than between the protective layer surface and the third information layer. For example, two resin layers, or the second intermediate layer and the protective layer, are present between the protective layer surface and the second information layer. In addition, the thickness from the protective layer surface to the third information layer is equivalent to the thickness of the protective layer itself. Therefore, the fluctuation in the thickness from the protective layer surface to the first information layer tends to be greater than the fluctuation in the thicknesses to the other information layers.

However, as shown in FIG. 6, the fluctuation in the thickness from the protective layer surface to the first information layer is within a fluctuation range of $\pm$3 $\mu$m, using the average thickness in the area from a radius of 23 mm to 24 mm as a benchmark.

A signal was recorded to and reproduced from the first information layer of the three-layer disks that were actually manufactured and that had comparatively greater thickness fluctuations (fluctuations of $\pm$3 $\mu$m), and the quality of the signal was evaluated.

To be more specific, the signal was recorded and reproduced at a linear speed of 7.36 m/s, using a recording and reproduction apparatus provided with an optical head having a wavelength of 405 nm and an objective lens with an NA of 0.85. The recording and reproduction apparatus performed aberration correction and learning according to the layer thicknesses in the area from a radius of 23 mm to 24 mm. The recording and reproduction apparatus recorded a signal onto the disk from a radius of 24 mm to the outermost area, while holding the results of the aberration correction and learning. After this, the recording and reproduction apparatus reproduced the recorded signal. A favorable signal quality was confirmed in all areas as a result. Based on this result, it was understood that a fluctuation in the thickness from the protective layer surface to the information layer within $\pm$3 $\mu$m in the surface of the medium relative to the average thickness value in the area from a radius of 23 mm to 24 mm did not have significant influence on the recording and reproduction properties.

Meanwhile, as shown in FIG. 6, the fluctuation ranges of the thicknesses from the protective layer surface to the second information layer and from the protective layer surface to the third information layer were kept lower than the fluctuation range of the thickness from the protective layer surface to the first information layer. Note that the fluctuation ranges of the thicknesses from the protective layer surface to the second information layer and from the protective layer surface to the third information layer are all no more than $\pm$3 $\mu$m compared to the average thickness value in the area from a radius of 23 mm to 24 mm. Furthermore, the a signal was recorded to and reproduced from the second and third information layers, and favorable results were obtained.

It should be noted that in the present experiment, the signal quality was evaluated for a single-surface capacity of 33.4 GB. However, high-quality signal recording and reproduction is realized in single-surface capacities of less than 33.4 GB, such as 32 GB or more, through the same thickness control. Furthermore, the recording densities may be the same in all information layers, or the recording density of one of the information layers may be different than the recording densities of the other information layers. Alternatively, the recording densities of all the information layers may be different from one another.

[5. Main Parameters]

A Blu-ray disk (BD) or an optical disk of another standard are examples of recording media to which the present invention can be applied. Descriptions regarding BDs shall be given hereinafter. BDs include, depending on the properties of the recording film, BD-ROMs, which are read-only types, BD-Rs, which are write-once types, and BD-RE, which are rewritable types. The present invention can be applied to any of the ROM (read-only), R (write-once), and RE (rewritable) types of BDs or optical disks of other standards. The primary optical constants and physical formats of Blu-ray disks are disclosed in the "Blu-ray Disk Reader" (Ohmsha), the white paper located on the homepage of the Blu-ray Association (http: //www. blu-raydisc.com/), and so on.

Laser light having a wavelength of approximately 405 nm (400 - 410 nm, if the allowable range of error for a base value of 405 nm is $\pm 5$ nm) and an objective lens having a numerical aperture (NA) of approximately 0.85 are used in the recording and reproduction of signals to and from BDs. The range of the NA of the objective lens is set to 0.84-0.86 when an error range of $\pm 0.01$ relative to the base value of 0.85 is allowable.

The track pitch in a BD is approximately 0.32 $\mu$m. The track pitch is set to a range of 0.310-0.330 $\mu$m when an error range of $\pm 0.010$ $\mu$m relative to the base track pitch value of 0.320 $\mu$m is allowable. In conventional BDs, one or two information layers are provided. The information layer recording surfaces are configured having one or two layers on a single surface as viewed from the laser light-entry side. In a BD, the distance from the surface of the protective layer to the recording surface is 75 $\mu$m - 100 $\mu$m.

17PP modulation is used as the modulation technique for the recorded signal. The mark length of the shortest recorded mark (2T mark: T is the cycle of the reference block (the reference cycle for modulation when recording a mark using a predetermined modulation technique)) is 0.149 $\mu$m (or 0.138$\mu$m) (the channel bit length: T is 74.50 nm (or 69. 00 nm)). The recording capacity is 25 GB for a single layer on one surface (or 27 GB) (and more specifically, 25.025 GB (or 27.020 GB)) and 50 GB for dual layers on a signal surface (or 54 GB) (more specifically, 50.050 GB (or 54.040 GB)). The channel clock frequency is 66 MHz (a channel bit rate of 66.000 Mbit/s) at a normal transfer rate (BD1x), 264 MHz (a channel bit rate of 264.000 Mbit/s) at a 4x transfer rate (BD4x), 396 MHz (a channel bit rate of 396.000 Mbit/s) at a 6x transfer rate (BD6x), and 528 MHz (a channel bit rate of 528.000 Mbit/s) at an 8x transfer rate (BD8x).

The standard linear speed (standard linear speed, 1x) is 4.917 m/sec (or 4.554 m/sec). The linear speeds for 2x, 4x, 6x, and 8x are 9.834 m/sec, 19.668 m/sec, 29.502 m/sec, and 39.336 m/sec, respectively. Generally, a linear speed that is higher than the standard linear speed is a positive integral multiple of the standard linear speed, but this is not limited to integers, and the speed may be a positive real number multiple. Furthermore, speeds slower than the standard linear speed, such as 0.5x, can be employed.

Although the above descriptions relate primarily to single- or dual-layer BDs with capacities of 25 GB (or 27 GB) per layer, the commercialization of which is already progressing, it should be noted that high-density BDs having recording capacities of approximately 32 GB or 33.4 GB per layer, BDs having three or four layers, and so on are also being investigated as ways to implement even higher capacities. The following descriptions relate to such BDs.

[6. Regarding Multiple Layers]

With a one-sided disk to and from which information is recorded and/or reproduced by laser light entering from the side of the protective layer, multiple information layers are provided between the substrate and the protective layer in the case where two or more information layers are present. An example of the structure of such a multilayer disk is illustrated in FIG. 18.

A disk 510 illustrated in FIG. 18 has (j+1) information layers 502 (where j is an integer no less than 0). To describe the structure of the disk 510 in further detail, the disk 510 has a cover layer (protective layer) 501, (j+1) information layers (Lj to L0 layers) 502, and a substrate 500, layered in that order from the surface on the side from which laser light 505 enters. Furthermore, intermediate layers 503, which serve as optical buffers, are inserted between each of the (j+1) information layers 502. In other words, with respect to the information layers 502, a base layer (L0) is provided in a position furthest from the light entrance surface with a predetermined amount of space therebetween (that is, the position furthest from the light source), and information layers (L1, L2, and so on up to Lj) are layered in order from the base layer (L0) toward the light entrance surface so as to increase the number of layers. The "light entrance surface" can be rephrased as the "protective layer surface".

Here, compared to a single-layer disk, a distance t51 from the light entrance surface to the base layer L0 in the multilayer disk 510 may be approximately the same as the distance from the light entrance surface to the information layer in a single-layer disk (for example, approximately 0.1 mm). Regardless of the number of layers, setting the distance to the deepest layer (the furthest layer) to a constant value (in other words, using a distance that is approximately the same as that in a single-layer disk) in such a manner makes it possible to maintain compatibility with respect to accessing the base layer, regardless of whether the medium has a single layer or multiple layers. It is furthermore possible to suppress an increase in the influence of tilt caused by an increase in the number of layers. An increase in the influence of tilt can be suppressed because although the deepest layer experiences the most influence of tilt, the distance to the deepest layer is set to approximately the same distance as in a single-layer disk, and as a result, the distance to the deepest layer does not increase even when the number of layers increases.

In addition, the direction in which the spot progresses (the reproduction direction) may be parallel path or opposite path.

With parallel path, the reproduction direction is the same for all layers. In other words, the spot progresses from the inside to the outside in all layers, or from the outside to the inside in all layers.

However, with opposite path, the reproduction direction is opposite between one layer and the layer adjacent thereto. In other words, if the reproduction direction of the base layer (L0) progresses from the inside to the outside, the reproduction direction of the information layer L1 progresses from the outside to the inside, and the reproduction direction of the information layer L2 progresses from the inside to the outside once again. In other words, the reproduction direction progresses from the inside to the outside for Lm (where m is 0 and even numbers) and progresses from the outside to the inside for L(m + 1), or the reproduction direction progresses from the outside to the inside for Lm (where m is 0 and even numbers) and progresses from the inside to the outside for L(m + 1).

The thickness of the protective layer (the cover layer) is set to be thinner as the focal distance decreases due to an increase in the numerical aperture NA, or to suppress the influence of spot distortion cause by tilt. The numerical aperture NA for BDs is approximately 0.85, as opposed to 0.45 for CDs and 0.65 for DVDs. For example, if the total thickness of the recording medium is approximately 1.2 mm, the thickness of the protective layer may be 10-200 $\mu$m. To be more specific, on a substrate of approximately 1.1 mm, a transparent protective layer of approximately 0.1 mm may be provided for a single-layer disk, and a protective layer of approximately 0.075 mm and a intermediate layer of approximately 0.025 mm may be provided for a dual-layer disk. If the disk has three or more layers, the protective layer and/or intermediate layers are even thinner.

[7. Exemplary Structures of Single- to Four-Layer Disks]

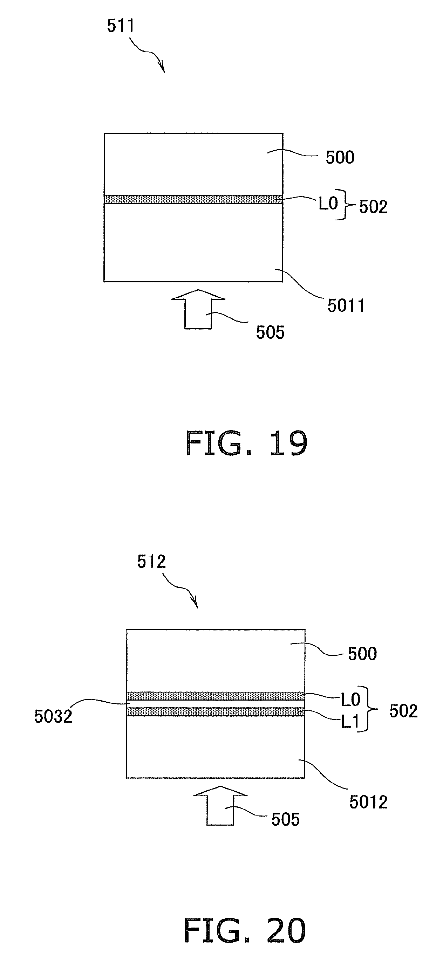

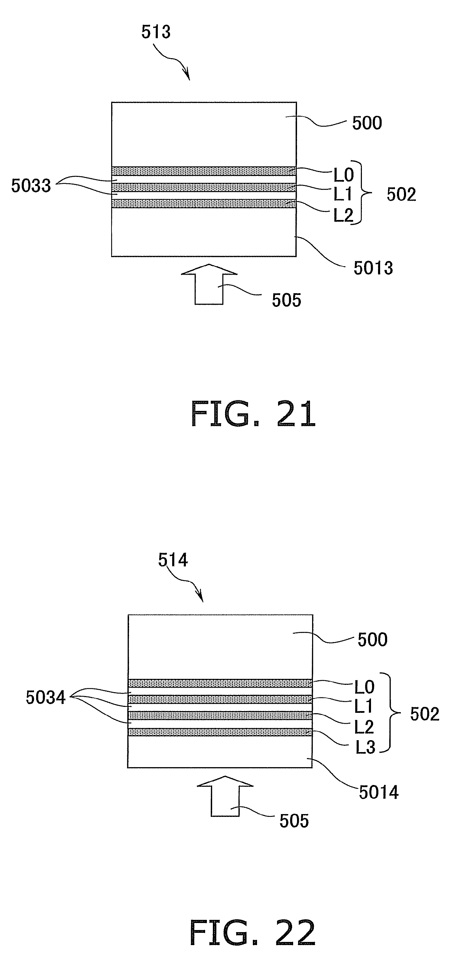

FIG. 19 illustrates an exemplary structure of a single-layer disk; FIG. 20 illustrates an exemplary structure of a dual-layer disk; FIG. 21 illustrates an exemplary structure of a three-layer disk; and FIG. 22 illustrates an exemplary structure of a four-layer disk.

In disks 511 to 514 shown in FIGS. 19 to 22, respectively, the thickness (distance) from the light entrance surface to the base layer L0 is constant regardless of the number of information layers.

The total disk thicknesses are approximately 1.2 mm for all of the disks 511 to 514. Note that it is preferable for the total thicknesses of the disks to be no more than 1.40 mm in the case where the disks 511 to 514 are to include other structures, such as printed labels.

Meanwhile, the thickness of the substrate 500 is approximately 1.1 mm and the distance from the light entrance surface to the base layer L0 is approximately 0.1 mm in all of the disks 511 to 514. In the single-layer disk shown in FIG. 19 (where j = 0 in FIG. 18), the thickness of a cover layer 5011 is approximately 0.1 mm. Meanwhile, in the dual-layer disk shown in FIG. 20 (where j = 1 in FIG. 18), the thickness of a cover layer 5012 is approximately 0.075 mm, and the thickness of a intermediate layer 5302 is approximately 0.025 mm. Meanwhile, in the three-layer disk shown in FIG. 21 (where j = 2 in FIG. 18) and the four-layer disk shown in FIG. 22 (where j = 3 in FIG. 18), the thicknesses of the layers are as described earlier.

[8. Other Disk Structures]

<8-1. Recording Capacity>

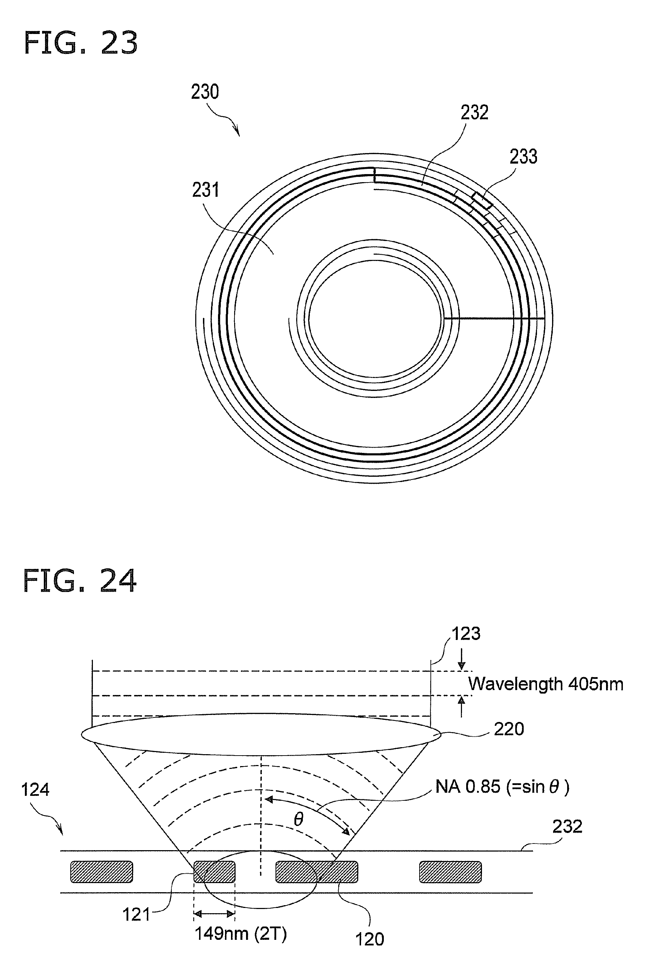

The disks described above may have the physical structure illustrated in FIG. 23. As shown in FIG. 23, multiple tracks 232 are formed in a disk-shaped disk 231, in a shape that is, for example, a series of concentric circles, a spiral shape, or the like. Multiple sectors in fine divisions are formed in each track 232. Note that data is recorded into each track 232 using blocks 233, which have predetermined sizes, as the unit for recording; this shall be discussed later.

The disk 231 has a recording capacity per information layer that is extended beyond that of conventional optical disks (for example, a 25 GB BD). Extended recording capacity is realized by improving the recording line density, and is realized by, for example, shortening the mark length of the recording marks recorded onto an optical disk. Here, "improving the recording line density" refers to shortening the channel bit length. The "channel bit" is a length corresponding to the cycle T of the reference clock (the reference cycle T for modulation when recording a mark using a predetermined modulation technique).

Note that the disk 231 may have multiple layers. However, the disk shall be discussed as having only one information layer hereinafter, to simplify the descriptions.

In a disk having multiple information layers, when the width is the same for the tracks provided in each information layer, the recording line density can be made different from layer to layer by using different mark lengths in each layer but using the same mark lengths within a single layer.

The tracks 232 are divided into blocks every 64 kB (kilobytes), which is the unit for recording data. Block address values are assigned to blocks in order. Each block is divided into subblocks of predetermined lengths, and one block is composed of three subblocks. Subblock numbers from 0 to 2 are assigned to each subblock in order.

<8-2. Recording Density>

Next, the recording density shall be described using FIGS. 24 to 28.

FIG. 24 illustrates a BD 124, serving as an example of a 25 GB BD. The BD recording and reproduction apparatus shown in FIG. 24 has a laser 123 with a wavelength of 405 nm and an objective lens 220 with a numerical aperture NA of 0.85.

Like DVDs, data is recorded onto a BD as a string of marks, resulting from physical alterations, on the tracks 232 of the optical disk. The mark strings in the BD 124 contains marks having numerals "120" and "121" added thereto. The mark in this mark string with the shortest length is called the "shortest mark". In FIG. 24, the mark 121 is the shortest mark.

In the BD 124, the recording capacity is 25 GB, and the physical length of the shortest mark 121 is 0.149 $\mu$m. The length of the shortest mark is equivalent to approximately 1/2.7 of the length of the shortest mark in a DVD. The length of the shortest mark is near the limit of the optical resolution performance, which is the limit for the identification of recording marks by a light beam, even if the wavelength parameters (405 nm) and the NA parameters (0.85) in the optical system are changed and the resolution performance of the laser is increased.

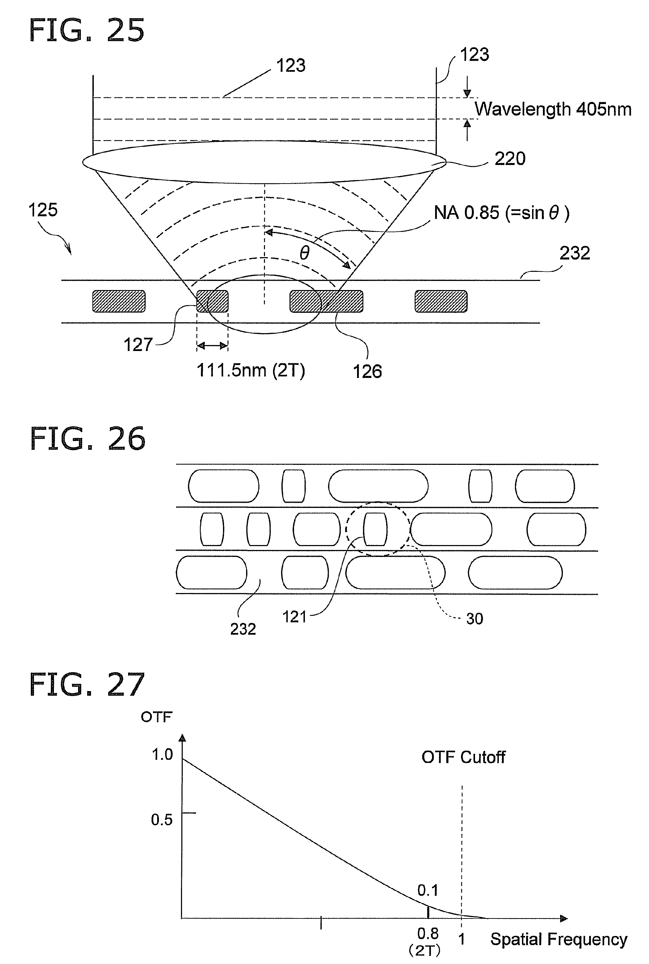

FIG. 26 illustrates a state in which a laser beam is irradiated upon a mark string recorded onto a track. With BDs, the stated optical system parameters result in a laser spot 30 of approximately 0.39 $\mu$m. If the recording line density is increased without changing the construction of the optical system, the recording marks become smaller relative to the spot diameter of the laser spot 30, leading to a degradation in the reproduction resolution performance.

For example, FIG. 24B illustrates an example of a BD whose recording density is greater than that of a 25 GB BD. The recording and reproduction apparatus for this BD has a laser 123 with a wavelength of 405 nm and an objective lens 220 with an NA of 0.85. Of the mark strings 126 and 127 in this disk, the physical length of the shortest mark 127 is 0.1115 $\mu$m. Compared to FIG. 25, the configuration shown in FIG. 25 has the same spot diameter of approximately 0.39 $\mu$m; however, the recording marks are relatively smaller, and the interval between the marks is smaller as well, resulting in poor reproduction resolution performance.

The amplitude of the reproduced signal when the recording marks are reproduced by a laser beam decreases as the recording marks become shorter, and become zero at the limit of the optical resolution performance. The inverse of the recording mark cycle is called the spatial frequency, and the relationship between the spatial frequency and the signal amplitude is called the OTF (Optical Transfer Function). The signal amplitude drops in an almost linear fashion as the spatial frequency increases. The frequency limit for reproduction, when the signal amplitude reaches zero, is called the OTF cutoff.

FIG. 27 is a graph illustrating the relationship between the OTF and the shortest recording mark with a recording capacity of 25 GB. The spatial frequency of the shortest mark in a BD is approximately 80% of the OTF cutoff, which is close to the OTF cutoff. It can also be seen that the amplitude of the reproduced signal of the shortest mark is approximately 10% of the maximum detectable amplitude, which is an extremely low value. The recording capacity of a BD when the spatial frequency of the shortest mark of the BD is extremely close to the OTF cutoff, or in other words, when the reproduction amplitude is nearly nonexistent, is approximately 31 GB. When the frequency of the reproduced signal of the shortest mark is near the OTF cutoff frequency or is a frequency greater than the OTF cutoff frequency, the frequency reaches or exceeds the limit of the laser resolution performance, leading to a decrease in the reproduction amplitude of the reproduced signal, and thus causing a dramatic degradation in the SN ratio.

For this reason, the recording line density of a high-recording density disk 125 shown in FIG. 25 can be assumed from the case where the frequency of the shortest mark of the reproduced signal is near the OTF cutoff frequency to the case where the frequency of the shortest mark of the reproduced signal is greater than or equal to the OTF cutoff frequency. Note that "the case where the frequency of the shortest mark is near the OTF cutoff frequency" includes the case where the frequency of the shortest mark is no more than the OTF cutoff frequency but is not significantly lower than the OTF cutoff frequency.

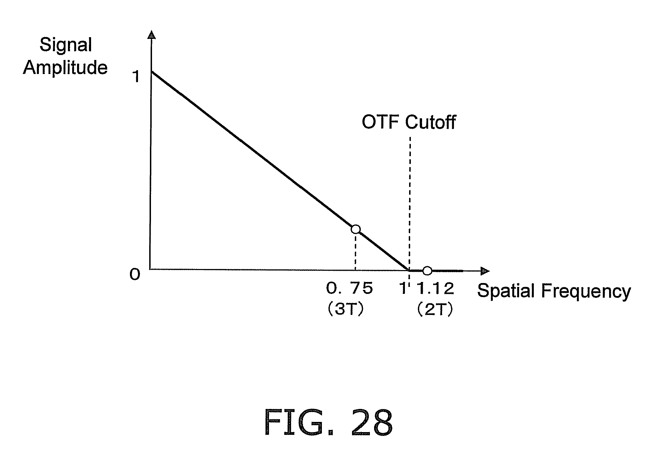

FIG. 28 is a graph illustrating an example of the relationship between the signal amplitude and the spatial frequency when the spatial frequency of the shortest mark (2T) is higher than the OTF cutoff frequency and the reproduced signal of 2T has an amplitude of 0. In FIG. 28, the spatial frequency of the shortest mark length 2T is 1.12 times the OTF cutoff frequency.

<8-3. Wavelength, Numerical Aperture, and Mark Length>

The relationship between the wavelength, numerical aperture, and mark length/space length in a high-recording density disk is as follows.

When the shortest mark length is taken as TM nm, and the shortest space length is taken as TS nm, and (shortest mark length + shortest space length) is expressed as "P", P is (TM + TS) nm. With 17 modulation, P = 2T + 2T = 4T. When three parameters, or a laser wavelength $\lambda$ (405 nm $\pm$5 nm, or in other words, 400-410 nm), a numerical aperture NA (0.85 $\pm$0.01, or in other words, 0.84-0.86), and a shortest mark + shortest space length P (with 17 modulation, the shortest length if 2T, so P = 2T + 2T = 4T), are used, and the reference T is small to the degree where the following holds true:

$$P \leq \lambda/2NA$$

the spatial frequency of the shortest mark is no less than the OTF cutoff frequency.
The reference T corresponding to the OTF cutoff frequency when the NA = 0.85 and $\lambda$ = 405 is:

$$T = 405/(2 \times 0.85)/4 = 59.558 \text{ nm}$$

Note that, conversely, when P > $\lambda$/2NA, the spatial frequency of the shortest mark is less than the OTF cutoff frequency.
In this manner, the SN ratio degrades due to the limit of the optical resolution performance, simply due to an increase in the recording line density. Therefore, there are cases where degradation of the SN ratio due to the multilayering of information layer is not allowable from the system margin standpoint. The SN ratio degradation is particularly marked from when the frequency of the shortest mark exceeds the OTF cutoff frequency, as described above.
Although the above discusses recording densities by comparing the frequency of the reproduced signal of the shortest mark to the OTF cutoff frequency, it should be noted that as further high densities are developed, the recording densities (recording line densities, recording capacities) corresponding thereto may be set using the relationship between the frequency of the reproduced signal of the next shortest mark (or the next-next shortest mark (or a recording mark beyond the next shortest mark)) and the OTF cutoff frequency, based on the same principles as described above.

<8-4. Recording Density and Number of Layers>

The specific recording capacity per layer in a BD suited to a recording and reproduction apparatus having specs such as a wavelength of 405nm and an NA of 0.85 can, when the spatial frequency of the shortest mark is near the OTF cutoff frequency, be assumed to be as follows, for example: approximately 29 GB (for example, 29.0 GB $\pm$0.5 GB or 29 GB $\pm$1 GB) or more, or approximately 30 GB (for example, 30.0 GB $\pm$0.5 GB or 30 GB $\pm$1 GB) or more, or approximately 31 GB (for example, 31.0 GB $\pm$0.5 GB or 31 GB $\pm$1 GB) or more, or approximately 32 GB (for example, 32.0 GB $\pm$0.5 GB or 32 GB $\pm$1 GB) or more.

Furthermore, the recording capacity per layer can, when the spatial frequency of the shortest mark is greater than or equal to the OTF cutoff frequency, be assumed to be as follows, for example: approximately 32 GB (for example, 32.0 GB $\pm$0.5 GB or 32 GB $\pm$1 GB) or more, or approximately 33 GB (for example, 33.0 GB $\pm$0.5 GB or 33 GB $\pm$1 GB) or more, or approximately 33.3 GB (for example, 33.3 GB $\pm$0.5 GB or 33.3 GB $\pm$1 GB) or more, or approximately 33.4 GB (for example, 33.4 GB $\pm$0.5 GB or 33.4 GB $\pm$1 GB) or more, or approximately 34 GB (for example, 34.0 GB $\pm$0.5 GB or 34 GB $\pm$1 GB) or more, or approximately 35 GB (for example, 35.0 GB $\pm$0.5 GB or 35 GB $\pm$1 GB) or more.

Particularly, when the recording density is approximately 33.3 GB, a recording capacity of approximately 100 GB (99.9 GB) can be realized using three layers, and when the recording density is approximately 33.4 GB, a recording capacity of more than 100 GB (100.2 GB) can be realized using three layers. This is approximately the same recording capacity as a four-layer construction for a 25 GB BD. For example, when the recording density is 33 GB, the difference between 33x3 = 99 GB and 100 GB is 1 GB (less than 1 GB); when the recording density is 34 GB, the difference between 34x3 = 102 GB and 100 GB is 2 GB (less than 2 GB); when the recording density is 33.3 GB, the difference between 33.3x3 = 99.9 GB and 100 GB is 0.1 GB (less than 0.1 GB); and when the recording density is 33.4 GB, the difference between 33.4x3 = 100.2 GB and 100 GB is 0.2 GB (less than 0.2 GB).

Note that extending the density extensively makes accurate reproduction difficult due to the influence of the reproduction properties of the shortest mark, as discussed earlier. Accordingly, approximately 33.4 GB is realistic as a recording density that does not extensively extend the recording density but also realizes a recording density of 100 GB or more.

The issue here is whether to structure the disk as a four-layer disk with 25 GB per layer, or as a three-layer disk with 33-34 GB per layer.

Multilayering is accompanied by a drop in the reproduced signal amplitude in each layer (SN ratio degradation), the influence of multilayer stray light (signals from adjacent information layers), and so on. For this reason, a disk having a lower number of layers, or in other words, three 33-34 GB layers can suppress the influence of such stray light to the greatest degree possible while also realizing a recording capacity of approximately 100 GB more easily than a disk having four 25 GB layers.

For this reason, disk manufacturers who wish to realize approximately 100 GB while multilayering as little as possible will likely select three layers of 33-34 GB. Meanwhile, disk manufacturers who wish to realize approximately 100 GB using a conventional format (a recording density of 25 GB) will likely select four layers of 25 GB. Thus manufacturers with different goals can reach those goals using these different structures. Implementing three and four layers in disks thus adds an element of freedom to disk design.

Meanwhile, if the recording density is 30 to 32 GB, the total recording capacity of a three-layer disk is 90 to 96 GB, and thus does not reach 100 GB. However, a four-layer disk realizes a capacity of over 120 GB. A disk having four layers whose recording densities are 32 GB enables the realization of a recording capacity of approximately 128 GB. The number 128 is a numerical value that matches with a power of 2 (2 to the 7th power), which is convenient in terms of computer processing. When a three-layer disk having a recording density that realizes approximately 100 GB is compared with such a four-layer disk, the reproduction properties demanded of the shortest mark in a four-layer disk are less stringent than the reproduction properties demanded of the shortest mark in a three-layer disk.

Accordingly, when extending the recording density, disks having multiple layers of different recording densities from one another (for example, approximately 32 GB and approximately 33.4 GB) provide the manufacturers of disks an element of freedom in terms of design. In other words, the combination of multiple types of recording densities and number of layers realizes this freedom of design. For example, manufacturers who wish to suppress the influence of multilayering while achieving high capacities can select a three-layer disk of approximately 100 GB, created from three layers of 33 to 34 GB. On the other hand, manufacturers who wish to suppress the influence of reproduction properties while achieving high capacities can select a four-layer disk of approximately 120 GB or more, created from four layers of 30 to 32 GB.

[9. Other Embodiments]

The diameter and thickness of the entire optical information recording medium, the thicknesses and materials of each layer present in the optical information recording medium, the manufacturing method thereof, and so on are not limited to the specific descriptions provided above, and can be altered.

For example, the above structures can be applied to various types of recording media, such as write-once, read-only, rewritable, and so on. Furthermore, although the above descriptions focus primarily on three or four-layer disks, the structures discussed above can be applied in optical information recording media having five or more information layers as well. In other words, the optical information recording medium can be provided with n information layers (where n is an integer greater than or equal to 3).

To rephrase, the optical information recording medium may be configured as described in [1] - [7] and [9] - [12] below.

Furthermore, the recording and reproduction apparatus is not limited to the specific configuration described above. For example, the laser light source can be replaced with another light source, and the wavelength of the light emitted by the light source, the numerical aperture of the objective lens, and so on are not limited to any specific numerical values. For example, the recording and reproduction apparatus may be achieved through the following [8].

[1] A disk-shaped optical information recording medium comprising:

a substrate;
first to nth information layers layered upon the substrate (where n is an integer of 3 or more);
kth intermediate layers provided between a kth information layer and a (k + 1)th information layer (where k = 1, 2, and so on up to n-1); and
a protective layer provided upon the nth information layer,
wherein the fluctuation range of the thicknesses from the protective layer surface to each of the information layers is no more than $\pm 3$ $\mu$m relative to the average value of the thicknesses within a range from a radius of 23 mm to 24 mm from the center of the optical information recording medium.

[2] The optical information recording medium according to [1],
wherein the optical information recording medium includes a region from which information can be reproduced using light; and
the difference between the thicknesses of each of the intermediate layers and the thickness of the protective layer is no less than 1 $\mu$m at all locations in the region.
[3] The optical information recording medium according to [1] or [2],
wherein the optical information recording medium includes an area from which information can be reproduced using light; and
the difference between the total of the thicknesses of the first to nth intermediate layers and the thickness of the protective layer is no less than 1 $\mu$m at all locations in the region.
[4] The optical information recording medium according to one of [1] to [3],
wherein the thickness of the first intermediate layer is no less than 22 $\mu$m and no more than 28 $\mu$m; and
the thickness of the second intermediate layer is no less than 15 $\mu$m and no more than 21 $\mu$m.

[5] The optical information recording medium according to one of [1] to [4],
wherein the thickness from the protective layer surface to the first information layer is no less than 94 $\mu$m and no more than 106 $\mu$m.
[6] The optical information recording medium according to one of [1] to [5],
wherein the thickness from the protective layer surface to the second information layer is no less than 69 $\mu$m and no more than 81 $\mu$m.
[7] The optical information recording medium according to one of [1] to [6],
wherein the thickness from the protective layer surface to the third information layer is no less than 51 $\mu$m and no more than 63 $\mu$m.
[8] A recording and reproduction apparatus that records information to the optical information recording medium according to one of [1] to [7] and/or reproduces information recorded on the optical information recording medium, the apparatus comprising:

 a laser light source having a wavelength no less than 400 nm and no more than 410 nm;
 an objective lens having an NA of 0.85 $\pm$0.01; and
 a spherical aberration correction unit that corrects spherical aberration in accordance with the thickness from the surface of the protective layer to an information layer, of the first to nth information layers, onto which laser light is irradiated.

[9] A three-layer disk comprising a 1.1 mm-thick substrate, one or more information layers, and a protective layer no more than 0.1 mm thick, and including three information layers according to the BD recording medium format, information having been recorded onto the information layers being reproduced by irradiating the information layer with laser light having a wavelength of 400 - 410 nm via an objective lens having a numerical aperture of 0.84-0.86,
wherein when the recording capacity of a single-layer disk having a single information layer or the recording capacity per layer in a dual-layer disk having two information layers according to the BD recording medium format is taken as $a$ (GB) (where $a$ is a real number greater than 0), and the recording capacity per layer of the three-layer disk is taken as $b$ (GB) (where $b$ is a real number greater than 0), the conditions $a < b$ and $4a \approx 3b$ are met.
[10] The three-layer disk according to zD3-0, wherein the condition $|3b - 4a| \leq 2$ is met.
[11] A four-layer disk comprising a 1.1 mm-thick substrate, one or more information layers, and a protective layer no more than 0.1 mm thick, and including four information layers according to the BD recording medium format, information having been recorded onto the information layers being reproduced by irradiating the information layer with laser light having a wavelength of 400 - 410 nm via an objective lens having a numerical aperture of 0.84-0.86,
wherein when the recording capacity per layer of a three-layer disk having three information layers according to the BD recording medium format is taken as $b$ (GB) (where $b$ is a real number greater than 0) and the recording capacity per layer of the four-layer disk is taken as $c$ (GB) (where $c$ is a real number greater than 0), the conditions $c < b$ and $3b < 4c$ are met.

[12] The four-layer disk according to [11], wherein the conditions $3c < 100$ and $4c$ is a power of 2 are met.
In all of the above embodiments, the expressions "no less than", "no more than", "-", "from... to..." and so on are assumed to include the border values in question. Furthermore, the expression "information layer" used above can be replaced with "recording layer" or "information recording layer" as well.

EXPLANATION OF REFERENCE

| | |
|---|---|
| 101 | substrate |
| 102 | first information layer |
| 103 | second information layer |
| 104 | third information layer |
| 105 | first intermediate layer |
| 106 | second intermediate layer |
| 107 | protective layer |
| 107a | protective layer surface |
| 108 | objective lens |
| 109 | recording/reproduction light |
| 110 | aberration correction unit |
| 111 | laser light source |
| 112 | polarizing beam splitter |
| 114 | photodetector |
| 115 | disk (optical information recording medium) |
| 116 | optical head |
| 201 | substrate |
| 202 | first information layer |
| 203 | second information layer |
| 204 | third information layer |
| 205 | Nth information layer |
| 206 | objective lens |
| 207 | laser light |
| 301 | optical path of information light to be read |
| 302 | optical path of stray light focused on third information layer |
| 303 | optical path of information light to be read |

| 304 | optical path of stray light focused on protective layer surface |
| 305 | optical path of information light to be read |
| 306 | optical path of stray light not focused on another information layer |
| 307 | optical path of stray light not focused on another information layer |
| 510, 511, 512, 513, 514, 230 | disk (optical information recording medium) |
| 501, 5011, 5012, 5013, 5014 | cover layer (protective layer) |
| 502 | information layer |
| 503, 5032, 5033, 5034 | intermediate layer |
| 701 | substrate |
| 702 | second information layer |
| 703 | third information layer |
| 704 | second intermediate layer |
| 705 | protective layer |
| 706 | objective lens |
| 707 | recording/reproduction light |
| 708 | aberration correction means |
| 1201 | first information layer |
| 1202 | second information layer |
| 1203 | third information layer |
| 1204 | protective layer |
| 1204a | protective layer surface |
| 1205 | optical path of information light to be read |
| 1206 | optical path of stray light focused on third information layer |
| 1207 | optical path of information light to be read |
| 1208 | optical path of stray light not focused on another information layer |
| 1209 | optical path of information light to be read |
| 1210 | optical path of stray light focused on second information layer that returns after five reflections |
| 1401 | first information layer |
| 1402 | second information layer |

| | |
|---|---|
| 1403 | third information layer |
| 1404 | protective layer |
| 1404a | protective layer surface |
| 1405 | optical path of information light to be read |
| 1406 | optical path of stray light |
| 1701 | disk (optical information recording medium) |
| 1702 | optical head |
| 1703 | light source |
| 1704 | laser light (recording light, reproduction light) |
| 1705 | collimate lens |
| 1706 | polarizing beam splitter |
| 1707 | quarter wave plate |
| 1708 | objective lens |
| 1709 | aperture |
| 1711 | cylindrical lens |
| 1712 | photodetector |

**Claims**

1. A disk-shaped optical information recording medium comprising:

   a substrate;
   first to nth information layers layered upon the substrate (where n is an integer of 3 or more);
   kth intermediate layers provided between a kth information layer and a (k + 1)th information layer (where k = 1, 2, and so on up to n-1); and
   a protective layer provided upon the nth information layer,
   wherein the fluctuation range of the thicknesses from the protective layer surface to each of the information layers is no more than $\pm 3$ $\mu$m relative to the average value of the thicknesses within a range from a radius of 23 mm to 24 mm from the center of the optical information recording medium.

2. The optical information recording medium according to claim 1,
   wherein the optical information recording medium includes an area from which information can be reproduced using light; and
   the difference between the thicknesses of each of the intermediate layers and the thickness of the protective layer is no less than 1 $\mu$m at all locations in the region.

3. The optical information recording medium according to claim 1 or 2,
   wherein the optical information recording medium includes an area from which information can be reproduced using light; and
   the difference between the total of the thicknesses of the first to nth intermediate layers and the thickness of the protective layer is no less than 1 $\mu$m at all locations in the region.

**4.** The optical information recording medium according to one of claims 1 to 3,
wherein the thickness of the first intermediate layer is no less than 22 $\mu$m and no more than 28 $\mu$m; and
the thickness of the second intermediate layer is no less than 15 $\mu$m and no more than 21 $\mu$m.

**5.** The optical information recording medium according to one of claims 1 to 4,
wherein the thickness from the protective layer surface to the first information layer is no less than 94 $\mu$m and no more than 106 $\mu$m.

**6.** The optical information recording medium according to one of claims 1 to 5,
wherein the thickness from the protective layer surface to the second information layer is no less than 69 $\mu$m and no more than 81 $\mu$m.

**7.** The optical information recording medium according to one of claims 1 to 6,
wherein the thickness from the protective layer surface to the third information layer is no less than 51 $\mu$m and no more than 63 $\mu$m.

**8.** A recording and reproduction apparatus that records information to the optical information recording medium according to one of claims 1 to 7 and/or reproduces information recorded on the optical information recording medium, the apparatus comprising:

    a laser light source having a wavelength no less than 400 nm and no more than 410 nm;
    an objective lens having an NA of 0.85 $\pm$0.01; and
    a spherical aberration correction unit that corrects spherical aberration in accordance with the thickness from the surface of the protective layer to an information layer, of the first to nth information layers, onto which laser light is irradiated.

**9.** A three-layer disk comprising a 1.1 mm-thick substrate, one or more information layers, and a protective layer no more than 0.1 mm thick, and including three information layers according to the BD recording medium format, information having been recorded onto the information layers being reproduced by irradiating the information layer with laser light having a wavelength of 400 - 410 nm via an objective lens having a numerical aperture of 0.84-0.86, wherein when the recording capacity of a single-layer disk having a single information layer or the recording capacity per layer in a dual-layer disk having two information layers according to the BD recording medium format is taken as a (GB) (where a is a real number greater than 0), and the recording capacity per layer of the three-layer disk is taken as b (GB) (where b is a real number greater than 0), the conditions $a < b$ and $4a \approx 3b$ are met.

**10.** The three-layer disk according to claim 9, wherein the condition $|3b - 4a| \leq 2$ is met.

**11.** A four-layer disk comprising a 1.1 mm-thick substrate, one or more information layers, and a protective layer no more than 0.1 mm thick, and including four information layers according to the BD recording medium format, information having been recorded onto the information layers being reproduced by irradiating the information layer with laser light having a wavelength of 400 - 410 nm via an objective lens having a numerical aperture of 0.84-0.86, wherein when the recording capacity per layer of a three-layer disk having three information layers according to the BD recording medium format is taken as b (GB) (where b is a real number greater than 0) and the recording capacity per layer of the four-layer disk is taken as c (GB) (where c is a real number greater than 0), the conditions $c < b$ and $3b < 4c$ are met.

**12.** The four-layer disk according to claim 11, wherein the conditions $3c < 100$ and $4c$ is a power of 2 are met.

115

101

t1 105

t2 106

t3 t4

tc (t5) 107

107a

102

103

104

116

108

109

112

110

111

114

# FIG. 1A

FIG. 1B

FIG. 2

## FIG. 3A

311

321
331
322
332
323

300
302
340
301

## FIG. 3B

312

321
331
322
332
323

300
304
340
303

## FIG. 3C

313

321
331
322
332
323

307
340
306
305

# FIG. 4

# FIG. 5

FIG. 6

FIG. 7

FIG. 8

## FIG. 9

## FIG. 10

FIG. 11

## FIG. 12A

1201
1202
1203
1204
1204a
1205
1206

## FIG. 12B

1201
1202
1203
1204
1204a
1207
1208

## FIG. 12C

1201
1202
1203
1204
1204a
1209
1210

FIG. 13

FIG. 14

FIG. 15A

FIG. 15B

FIG. 16

FIG. 17

FIG. 18

511

500

L0 } 502

5011

505

FIG. 19

512

500

5032

L0
L1 } 502

5012

505

FIG. 20

513

500

5033 — L0
L1 } 502
L2

5013

505

FIG. 21

514

500

5034 — L0
L1 } 502
L2
L3

5014

505

FIG. 22

# FIG. 23

# FIG. 24

# FIG. 25

123

123

Wavelength 405nm

220

125

NA 0.85 (=sin θ)

θ

232

127

111.5nm (2T)

126

# FIG. 26

232

121

30

# FIG. 27

OTF

1.0

0.5

OTF Cutoff

0.1

0.8
(2T)

1

Spatial Frequency

FIG. 28

## INTERNATIONAL SEARCH REPORT

| | International application No. |
| | PCT/JP2009/003536 |

A. CLASSIFICATION OF SUBJECT MATTER
G11B7/24(2006.01)i

According to International Patent Classification (IPC) or to both national classification and IPC

B. FIELDS SEARCHED

Minimum documentation searched (classification system followed by classification symbols)
G11B7/24

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-257759 A (Matsushita Electric Industrial Co., Ltd.), 04 October, 2007 (04.10.07), Claims 1, 8 to 10; Par. Nos. [0030], [0078] (Family: none) | 1-12 |
| Y | JP 2007-293997 A (Matsushita Electric Industrial Co., Ltd.), 08 November, 2007 (08.11.07), Par. No. [0005] (Family: none) | 1-12 |
| Y | JP 2008-117513 A (Matsushita Electric Industrial Co., Ltd.), 22 May, 2008 (22.05.08), Par. Nos. [0027] to [0030], [0038] & US 2008/0109837 A1 | 2-7 |

| ☒ | Further documents are listed in the continuation of Box C. | ☐ | See patent family annex. |

| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| 09 September, 2009 (09.09.09) | 29 September, 2009 (29.09.09) |

| Name and mailing address of the ISA/ | Authorized officer |
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/003536

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-147128 A (Hitachi Maxell, Ltd.), 08 June, 2006 (08.06.06), Par. No. [0005] & US 2006/0087959 A1 | 9-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001155380 A
- JP 2004213720 A